# EUROPÄISCHE PATENTSCHRIFT

(11) **EP 3 807 626 B1**
(45) Veröffentlichungstag und Bekanntmachung des Hinweises auf die Patenterteilung: **22.04.2026**
(21) Anmeldenummer: 19731654.0
(22) Anmeldetag: 12.06.2019
(51) Int. Cl.: G01N 27/327

(54) **BIOSENSOR, VERFAHREN ZUR DETEKTION MIT DIESEM BIOSENSOR, VERFAHREN ZUR HERSTELLUNG UND VERWENDUNG DES BIOSENSORS**
BIOSENSOR, METHOD FOR DETECTING WITH SAID BIOSENSOR, METHOD FOR PRODUCING AND USE OF SAID BIOSENSOR
BIOCAPTEUR, PROCÉDÉ DE DÉTECTION UTILISANT CE BIOCAPTEUR, PROCÉDÉ DE FABRICATION ET UTILISATION DU BIOCAPTEUR

(30) Priorität: 14.06.2018 DE 102018114206
(43) Veröffentlichungstag der Anmeldung: 21.04.2021
(73) Patentinhaber: Ruhr-Universität Bochum, 44801 Bochum (DE)
(72) Erfinder: PLUMERÉ, Nicolas, 94315 Straubing (DE); ZHANG, Huijie, 44807 Bochum (DE); VÖPEL, Tobias, 44388 Dortmund (DE); KOPIEC, Gabriel Bruno, 44143 Dortmund (DE); BUESEN, Darren, 44801 Bochum (DE)
(74) Vertreter: Michalski Hüttermann & Partner Patentanwälte mbB
(86) Internationale Anmeldenummer: PCT/EP2019/065346
(87) Internationale Veröffentlichungsnummer: WO 2019/238751

(56) Entgegenhaltungen:
- US-A1- 2012 211 372
- US-A1- 2013 153 416
- NICOLAS PLUMERÉ ET AL: "Enzyme-Catalyzed O 2 Removal System for Electrochemical Analysis under Ambient Air: Application in an Amperometric Nitrate Biosensor", ANALYTICAL CHEMISTRY, vol. 84, no. 5, 10 February 2012 (2012-02-10), US, pages 2141 - 2146, XP055616634, ISSN: 0003-2700, DOI: 10.1021/ac2020883

## Beschreibung

Die vorliegende Erfindung betrifft einen Biosensor. Die vorliegende Erfindung betrifft insbesondere einen Biosensor mit verbesserter Resistenz gegen den Einfluss von Sauerstoff. Die folgende Erfindung betrifft ferner ein Verfahren zum Herstellen eines derartigen Sensors. Weiterhin betrifft die vorliegende Erfindung ein Verfahren zum Detektieren eines Analyten.

Elektrochemische Biosensoren sind grundsätzlich weitläufig bekannt. Aktuell werden elektrochemische Biosensoren hauptsächlich eingesetzt, um zum Beispiel die Glukosekonzentration oder die Laktosekonzentration einer wässrigen Probe mit Hilfe einer enzymatischen Reaktion zu ermitteln.

Die am meist verbreiteten elektrochemischen Biosensoren werden zur Bestimmung des Glukosegehaltes verschiedener Proben verwendet. Sie sind dabei von hoher Bedeutung in Bereichen wie der Lebensmittelanalytik oder der medizinischen Diagnostik. Täglich werden in Deutschland mehrere Millionen Blutglukosemessungen (ca. 24 Millionen Messungen pro Tag) von Diabetes Mellitus Patienten durchgeführt. Diese Praxis hat zu einer verbesserten Behandlung von Diabetes geführt und ist aus dem täglichen Behandlungsplan nicht mehr wegzudenken. Jedoch wird die Genauigkeit der kommerziell erhältlichen Geräte kontrovers diskutiert, da diese zu unerwünschten Fehlbehandlungen/ Einschätzungen führen kann, welche in einigen Fällen bereits zum Tod von Patienten geführt haben (Olansky, Diabetes Care, 2010). Gemäß der DIN EN ISO 15197:2015 gelten seit kurzem die folgenden Regeln für die Genauigkeit von Blutzuckermessgeräten: Die Messwerte dürfen maximal ± 15% bei Messwerten ≥ 100 mg/dl und ± 15 mg/dl bei Messwerten unter 100 mg/dl vom Laborwert abweichen. Durch eine Verringerung der Toleranzen kann der individuelle Behandlungserfolg verbessert werden. Die auf dem Markt am weitesten verbreiteten Biosensoren für Glucose basieren auf den Enzymen Glucose Dehydrogenase (GDH) oder Glukose Oxidase (GO). Beide Enzyme haben unterschiedliche Nachteile, die die Genauigkeit der Messung beeinflussen können. So liefern einige der GDH basierten-Systeme (Teststreifen mit GDH-PQQ) falsche Messwerte in Anwesenheit bestimmter Medikamente und reagieren unspezifisch mit anderen Zuckern wie Maltose, Galaktose und Xylose. Ansonsten kann es zu falsch erhöhten Messwerten kommen, die zu einer Nichterkennung von Hypoglykämien mit Todesfolge führen können. Deswegen hat die FDA im Jahr 2009 eine Warnung herausgegeben, in der sie von der Verwendung von GDH-PQQ Systemen bei der Behandlung mit Medikamenten, die diese Zucker enthalten, abrät (FDA Public Health Notification: Potentially Fatal Errors with GDH-PQQ* Glucose Monitoring Technology). Mittlerweile werden auch mutierte Varianten des Enzyms verwendet, die eine verringerte Affinität für andere Zucker als Glukose haben.

Es gibt jedoch auch Berichte darüber, dass mutierte Formen des Enzyms zu erhöhten Messwerten in Anwesenheit von Galaktose geführt haben (Ceriotti, J. Clin. Sci. Tech., 2015). Es werden außerdem andere GDH basierte Testsysteme genutzt bei denen die Spezifität des Enzyms für andere Zucker nicht zu einer Verfälschung der Ergebnisse führt (GDH-FAD, GDH-NAD). Testsysteme auf GO Basis sind weniger anfällig für Medikamente, pH sowie Temperatur im Patientenblut und aufgrund ihrer Spezifizität für Glukose nicht anfällig für andere Zucker. Darüber hinaus ist GO günstig herzustellen und sehr sensitiv (Aggidis, Biosensors and Bioelectronics, 2015).

Jedoch weisen GO Testsysteme eine Empfindlichkeit gegenüber erhöhten oder erniedrigten Sauerstoffkonzentrationen auf, nämlich den sogenannten Sauerstoff-Effekt. So führt eine erhöhte Sauerstoffkonzentration zu niedrigeren Messwerten, wohingegen eine erniedrigte Sauerstoffkonzentration in überhöhten Messwerten resultiert (Schmid, Diabetes Technol Ther., 2014). In Anwesenheit von Sauerstoff kommt es außerdem zur Bildung von Wasserstoffperoxid, welches die verwendete GO deaktivieren kann (Prévoteau, Electrochimica Acta, 2012).

Nach heutigem Stand der Technik sind Biosensoren bekannt, bei denen der Einfluss von Sauerstoff, der sogenannte Sauerstoff-Effekt durch Korrekturmethoden eliminiert werden soll.

Nachteil dieser Korrekturmethode ist die Notwendigkeit einer zusätzlichen Elektrode, die den Aufbau eines Sensors komplexer und dadurch kostenintensiver macht. Ferner ist eine Berücksichtigung des Sauerstoffeffekts bekannt durch die gleichzeitige Verwendung von GO und GDH. Der Nachteil bei dieser Methode besteht aber auch hier darin, dass eine zusätzliche Elektrode notwendig ist, die den Aufbau des Sensors komplexer und kostenintensiver macht. Außerdem wird bei den beschriebenen Verfahren der Sauerstoff nicht entfernt, sondern nur dessen Einfluss gemessen und anschließend korrigiert. Diese Systeme funktionieren nur für die Bestimmung von Glukose, da sie die Eigenschaften der glukosespezifischen Sensorenzyme nutzen.

Grundsätzliche Veröffentlichungen auf diesem Gebiet umfassen etwa
- Aggidis AG, Newman JD, Aggidis GA. Investigating pipeline and state of the art blood glucose biosensors to formulate next steps. Biosens Bioelectron. 2015 Dec 15; 74:243-62;
- Cass AE, Davis G, Francis GD, Hill HA, Aston WJ, Higgins IJ, Plotkin EV, Scott LD, Turner AP., Ferrocene-mediated enzyme electrode for amperometric determination of glucose, Anal Chem. 1984 Apr;56(4):667-71;
- Dicks JM, Aston WJ, Davis G, Turner APF, Mediated amperometric biosensors for d-galactose, glycolate and 1-amino acids based on a ferrocene-modified carbon paste electrode, Analytica Chimica Acta, Volume 182, 1986, Pages 103-112;
- Ceriotti F, Kaczmarek E, Guerra E, Mastrantonio F, Lucarelli F, Valgimigli F, Mosca A. Comparative performance assessment of point-of-care testing devices for measuring glucose and ketones at the patient bedside. J Diabetes Sci Technol. 2015 Mar; 9(2):268-77.
- Olansky L, Kennedy L. Finger-stick glucose monitoring: issues of accuracy and specificity. Diabetes Care. 2010 Apr; 33(4):948-9;
- Van Hecke W, Salaheddin C, Ludwig R, Dewulf J, Haltrich D, Van Langenhove H. Biocatalytic cascade oxidation using laccase for pyranose 2-oxidase regeneration. Bioresour Technol. 2009 Dec; 100(23):5566-73;
- Plumeré N, Henig J, Campbell WH. Enzyme-catalyzed O2 removal system for electrochemical analysis under ambient air: application in an amperometric nitrate biosensor. Anal Chem. 2012 Mar 6; 84(5):2141-6;
- Prévoteau A., Mano N., Oxygen reduction on redox mediators may affect glucose biosensors based on "wired" enzymes, Electrochimica Acta 68 (2012) 128-133;
- Schmid C, Baumstark A, Pleus S, Haug C, Tesar M, Freckmann G. Impact of partial pressure of oxygen in blood samples on the performance of systems for self-monitoring of blood glucose. Diabetes Technol Ther. 2014 Mar; 16(3):156-65; sowie

US 7,955,484; US 9,187,779; US 761162; US 9,546,390; US 5,431,800 A; US 5,628,890 A; US 5,997,817 A; US 6,299,757 B1; US 8,475,638 B2; US 7,727,467 B2; und US; 7,906,009 B2.

Nach heutigem Stand der Technik sind ferner Methoden bekannt, die Sauerstoff oder andere Moleküle in einem Biosensor entfernen.

Beispielsweise sind Biosensoren bekannt aus Maidan R, Heller A. Elimination of electrooxidizable interferants in glucose electrodes, JACS, 1991, 113 (23), 9003-9004 oder auch Lopez F, Ma S, Ludwig R, Schuhmann W, Ruff A. A Polymer Multilayer Based Amperometric Biosensor for the Detection of Lactose in the Presence of High Concentrations of Glucose, Electroanalysis, 2017, 29 (1), 154-161. Die hier beschriebenen Biosensoren bestehen dabei aus mehreren Lagen. Die unterste Lage ist elektrisch mit der Elektrode verbunden und kann Elektronen übertragen. In dieser Lage befindet sich ein Enzym welches spezifisch für den Analyten ist. Auf diese Lage wird dann eine weitere Schicht aufgebracht in welche Enzyme zur Entfernung von Sauerstoff (Maidan, JACS, 1991) oder anderen Molekülen wie z.B. Glukose (Lopez, Electroanalysis, 2017) und Wasserstoffperoxid eingebettet sind. Im Labormaßstab eignet sich diese Vorgehensweise um störungsresistente Biosensoren herzustellen. Jedoch ist die Herstellung einer Multilage für die Massenproduktion (ca. 750 Millionen Teststreifen pro Tag (weltweit), 24 Millionen Teststreifen pro Tag (Deutschland)) weniger geeignet, da diese kostenintensiver ist.

Lopez F, Ma S, Ludwig R, Schuhmann W, Ruff A. A Polymer Multilayer Based Amperometric Biosensor for the Detection of Lactose in the Presence of High Concentrations of Glucose, Electroanalysis, 2017, 29 (1), 154-161 beschreibt ferner eine Methode zur Sauerstoffentfernung bei der das ein bestimmtes Enzymsystem verwendet wird, dass in Plumeré et al., Anal. Chem., 2012 (siehe oben) beschrieben ist. Dieses Enzymsystem wird hier als Teil einer Multilage verwendet. Das bedeutet, dass ein Sensorenzym durch eine Polymerschicht bedeckt ist, in der die Enzyme zur Sauerstoffentfernung eingebettet sind. Diese Methode hat j edoch den Nachteil, dass einerseits die Herstellung eines derartigen Teststreifens beziehungsweise Biosensors vergleichsweise komplex und dadurch kostenintensiv ist und andererseits die Performance des Biosensors gegebenenfalls nicht optimal ist.

Maidan R, Heller A. Elimination of electrooxidizable interferants in glucose electrodes, JACS, 1991, 113 (23), 9003-9004 beschreibt ferner, dass, um Wasserstoffperoxid zu generieren, als Nebenreaktion Sauerstoff durch ein Enzymsystem (Lactat Oxidase) entfernt wird. Dabei werden vergleichsweise große Probenvolumina verwendet.

In Monteiro T, Rodrigues PR, Gonçalves AL, Moura JJ, Jubete E, Añorga L, Piknova B, Schechter AN, Silveira CM, Almeida MG. Construction of effective disposable biosensors for point of care testing of nitrite, Talanta. 2015 Sep 1;142:246-51, wird ebenfalls das Enzymsystem zur Sauerstoffentfernung verwendet, welches in der vorstehend beschriebenen Veröffentlichung Plumeré et al., Anal. Chem. 2012 bereits beschrieben wurde. Das Probenvolumen welches hier verwendet wurde ist ausweislich des Experiments bei Probenvolumen ≥100 µl.

Bei der in Quan D, Shim JH, Kim JD, Park HS, Cha GS, Nam H, Electrochemical determination of nitrate with nitrate reductase-immobilized electrodes under ambient air, Anal. Chem., 2005, 77(14):4467-4473 beschriebenen Methode wird Sauerstoff mit Hilfe von Sulfit entfernt. Die beschriebene Siebdruckelektrode wird in ein Probengefäß integriert. Das Volumen dieses Gefäßes ist auf ein Volumen ≥100 µl ausgelegt.

Das Dokument US 2013/0153416 A1 befasst sich insbesondere mit einer Anordnung einer Vielzahl von Biosensoren, die mikrofluidisch ausgestaltet sind. Derartige Biosensoren arbeiten insbesondere mit Enzymen, die für bestimmte Targets katalytisch aktiv sind und können ferner Probenvolumina in einer Größe von 0,1-20 µl analysieren und Kanäle in einer Größe von kleiner als 500 µl aufweisen, etwa um eine schnelle Analyse zu ermöglichen. Es ist ferner beschrieben, dass Sorptionsmaterialien zum Sorbieren und Desorbieren von Flüssigkeit vorgesehen sind, um einen definierten Flüssigkeitsgehalt einstellen zu können.

Derartige aus dem Stand der Technik bekannte Lösungen können jedoch noch Verbesserungspotential aufweisen insbesondere hinsichtlich einer effektiven und sicheren Messung mit Biosensoren bei sehr kleinen Probenvolumina.

Es ist daher die Aufgabe der vorliegenden Erfindung, eine Maßnahme zu schaffen, durch welche wenigstens ein Nachteil des Stands der Technik zumindest teilweise behoben werden kann. Es ist insbesondere eine Aufgabe der vorliegenden Erfindung, eine Lösung bereitzustellen, mit der eine effektive und sichere Messung mit Biosensoren bei sehr kleinen Probenvolumina möglich wird.

Die Lösung der Aufgabe erfolgt erfindungsgemäß durch einen Biosensor mit den Merkmalen des Anspruchs 1. Die Lösung der Aufgabe erfolgt erfindungsgemäß ferner durch ein Verfahren mit den Merkmalen des Anspruchs 6, durch ein Verfahren mit den Merkmalen des Anspruchs 8 und durch eine Verwendung mit den Merkmalen des Anspruchs 10. Bevorzugte Ausgestaltungen der Erfindung sind in den Unteransprüchen, in der Beschreibung und in den Figuren offenbart, wobei weitere in den Unteransprüchen oder in der Beschreibung oder den Figuren oder dem Beispiel beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Die vorliegende Erfindung betrifft einen elektrochemischen Biosensor zur Detektion wenigstens eines in einem Analytlösungsmittel gelösten Analyten, aufweisend einen kapillaren Detektionsraum und eine Mehrzahl an Elektroden, wobei die Mehrzahl an Elektroden wenigstens eine Arbeitselektrode aufweist, welche einen in dem kapillaren Detektionsraum positionierten Messbereich aufweist, der mit einem immobilen Detektionsmittel zum Wechselwirken mit dem Analyten versehen ist, und wobei die Mehrzahl an Elektroden ferner eine Gegenelektrode aufweist, die in den kapillaren Detektionsraum verläuft, und wobei die Mehrzahl an Elektroden außerhalb des kapillaren Detektionsraums elektrisch kontaktierbar ist, wobei der kapillare Detektionsraum ein Volumen in einem Bereich von ≤ 10µl aufweist, wobei in dem kapillaren Detektionsraum ferner ein sauerstoffbindendes oder sauerstoffreaktives Inertisierungsmittel vorgesehen ist, das zumindest zum Teil zwischen der Arbeitselektrode und einer Eingangsöffnung des kapillaren Detektionsraums positioniert ist, und wobei die Länge des kapillaren Detektionsraums zwischen der Arbeitselektrode und der Eingangsöffnung und die Art und Menge des Inertisierungsmittels derart gewählt und aneinander angepasst sind, dass von der Eingangsöffnung in Richtung zu der Arbeitselektrode in dem im Detektionsraum angeordneten Analytlösungsmittel diffundierender Sauerstoff vor einem Erreichen der Arbeitselektrode durch das Inertisierungsmittel aus dem Analytlösungsmittel vollständig entfernbar ist und das Inertisierungsmittel ist in dem Analytlösungsmittel zumindest teilweise lösbar, so dass bei einem Einströmen des Analytlösungsmittels das Inertisierungsmittel unmittelbar zumindest teilweise, insbesondere vollständig lösbar ist.

Ein derartiger Biosensor kann auf einfache Weise eine verlässliche und insbesondere sauerstoffunabhängige Detektion eines zu detektierenden Analyten erlauben, wobei der Analyt in einem Analytlösungsmittel gelöst ist. Dabei kann sowohl nur eine qualitative oder nur eine quantitative oder sowohl eine qualitative und eine quantitative Detektion erfolgen.

Um dies zu ermöglichen ist es vorgesehen, dass der Biosensor zunächst einen kapillaren Detektionsraum aufweist. Unter einem kapillaren Detektionsraum soll dabei insbesondere ein derartiger Raum beziehungsweise ein derartiges Volumen verstanden werden, in welchem die Detektion des Analyten stattfindet und welcher als Kapillare ausgestaltet ist. Unter einer Kapillare soll dabei insbesondere ein derartiger Raum verstanden werden, der ein vergleichsweise geringes Volumen aufweist und Kapillareffekte ermöglicht. Bei dem hier beschriebenen Biosensor liegt ein besonders geringes Volumen auf in einem Bereich von ≤ 10µl, beispielsweise von ≤ 5µl.

Ferner weist der Biosensor eine Mehrzahl an Elektroden auf, wobei die Mehrzahl an Elektroden wenigstens eine Arbeitselektrode aufweist, welche einen in dem kapillaren Detektionsraum positionierten Messbereich aufweist, der mit einem immobilen Detektionsmittel zum Wechselwirken mit dem Analyten versehen ist. In anderen Worten ist die für elektrochemische Biosensoren an sich bekannte Arbeitselektrode mit einem Detektionsmittel versehen, welches nicht mobil ist, also auch in Kontakt mit dem Analyten beziehungsweise dem Analytlösungsmittel an der gewünschten Position verbleibt. Ein Detektionsmittel soll dabei in an sich bekannter Weise ein derartiges Mittel, wie etwa Reagenz, sein, welches mit dem Analyten wechselwirkt, beispielsweise reagiert, so dass die Reaktion mit dem Analyten und damit der Analyt selbst unter Verwendung der Arbeitselektrode detektierbar ist.

Entsprechend weist die Mehrzahl an Elektroden ferner eine Gegenelektrode auf, die in den kapillaren Detektionsraum verläuft und somit ebenfalls mit dem Analytlösungsmittel in Kontakt kommt.

Weiterhin kann beispielsweise eine sogenannte Referenzelektrode vorgesehen sein, wodurch eine sogenannte Dreielektrodenanordnung erzeugt werden kann. Eine derartige Anordnung kann insbesondere gewählt werden, um bei einer beispielhaften amperometrischen Messung möglichst unbeeinflusst von stromabhängigen Prozessen an der Gegenelektrode zu sein. Diese Dreielektrodenanordnung umfasst somit eine Arbeits-, eine Gegen- und eine Referenzelektrode. Die analytisch interessierende Reaktion beziehungsweise Wechselwirkung läuft an der Arbeitselektrode ab, wobei das Potential mit einer hochohmigen Referenzelektrode kontrolliert wird. Die niederohmige Gegenelektrode dient lediglich als Stromkontakt. Alle Abweichungen vom vorgewählten Sollwert der Arbeitsspannung können so durch einen Potentiostaten automatisch korrigiert werden.

Entsprechend kann, wenn die Arbeitselektrode und die Gegenelektrode und gegebenenfalls weitere vorliegenden Elektroden außerhalb des kapillaren Detektionsraums elektrisch kontaktierbar sind, eine elektrochemische Detektion des Analyten durch amperometrische Messungen stattfinden. Hierzu kann somit über ein bestenfalls sehr empfindliches Amperemeter der Stromfluss gemessen werden, wobei die Höhe des Stroms proportional zur Konzentration des Analyten ist. Eine derartige Funktionalität ist für elektrochemische Biosensoren dem Grunde nach bekannt. Zur Bestimmung des Analyten können jedoch grundsätzlich verschiedene elektrochemische Methoden wie etwa Koulometrie, Amperometrie, Voltammetrie, oder Potentiometrie verwendet werden.

Bei dem hier beschriebenen Biosensor ist es ferner vorgesehen, dass in dem kapillaren Detektionsraum ein sauerstoffbindendes oder sauerstoffreaktives Inertisierungsmittel vorgesehen ist, das zumindest zum Teil zwischen der Arbeitselektrode und einer Eingangsöffnung des kapillaren Detektionsraums positioniert ist. Durch ein derartiges Inertisierungsmittel kann in dem Analytlösungsmittel vorliegender Sauerstoff aus letzterem entfernt werden. Hierzu kann der Sauerstoff beispielsweise an dem Inertisierungsmittel gebunden werden oder mit dem Inertisierungsmittel reagieren. Eine Eingangsöffnung ist ferner eine derartige Öffnung des Detektionsraums, durch welche zu untersuchende Analytlösung in den Detektionsraum gelangt.

Dabei ist es ferner vorgesehen, dass die Länge des kapillaren Detektionsraums zwischen der Arbeitselektrode und der Eingangsöffnung und das Inertisierungsmittel derart gewählt und aneinander angepasst sind, dass von der Eingangsöffnung in Richtung zu der Arbeitselektrode in dem Analytlösungsmittel diffundierender Sauerstoff vor einem Erreichen des Detektionsmittels durch das Inertisierungsmittel aus dem Analytlösungsmittel vollständig entfernbar ist.

In anderen Worten ist es vorgesehen, dass nicht lediglich ein frei wählbares Inertisierungsmittel in einer frei wählbaren Menge in einen Detektionsraum mit einer frei wählbaren Größe positioniert wird, sondern dass insbesondere eine Vielzahl an Parametern derart spezifisch an einander angepasst werden, um sicherzustellen, dass kein Sauerstoff durch Diffusionsprozesse von der Eingangsöffnung zu der Arbeitselektrode und dem Detektionsmittel gelangen kann. Die aneinander anpassbaren Parameter umfassen dabei insbesondere die Länge des kapillaren Detektionsraums zwischen der Arbeitselektrode und der Eingangsöffnung und das Inertisierungsmittel. Unter einer Anpassung des Inertisierungsmittels wird dabei die Art und die Menge des Inertisierungsmittels verstanden.

Eine derartige Anpassung der jeweiligen Parameter kann, um die Sauerstoffentfernung und den Abstand der Elektrode zur Eingangsöffnung beziehungsweise Kapillaröffnung zu optimieren, etwa mittels Versuchen experimentell durchgeführt werden. Ferner kann dies durch eine Computersimulation erfolgen, die Auskunft über die genauen Dimensionen und die zu verwendende Konzentrationen des Inertisierungsmittels, wie etwa eines Enzyms, gibt. Dies ermöglicht eine optimierte und dadurch kosteneffektive Planung eines Biosensors und dadurch eine verbesserte Herstellbarkeit.

Bezüglich der Sauerstoffkonzentration in dem Analytlösungsmittel, so kann diese gegebenenfalls in die Betrachtung mit einfließen, auch wenn der Einfluss eher gering ist. Unter normalen Umgebungsbedingungen sollte die Sauerstoffkonzentration allerdings nämlich schwanken. Man kann etwa von 8 mg/l ausgehen, was ungefähr einer Konzentration bei 25°C entspricht. Der Arbeitsbereich eines Sensors liegt in der Regel in einem Temperaturbereich von 10°C bis 37°C. In diesem Bereich ist die Konzentration an gelöstem Sauerstoff etwa in einem Bereich von 11,3 bis 6,7 mg/l bei Normaldruck (1013 hPa). Diese Werte verändern das Arbeiten des Inertisierungsmittels kaum.

Insbesondere die vorstehend beschriebene Ausgestaltung kann gegenüber den Lösungen aus dem Stand der Technik signifikante Vorteile aufweisen.

Der vorstehend beschriebene Biosensor kann insbesondere dem Problem begegnen, dass elektrochemische Biosensoren durch gelösten Sauerstoff und ferner durch zusätzliche Lösungsvorgänge aus der Umgebungsluft beeinflusst werden. Im Detail führt bei elektrochemischen Biosensoren die Anwesenheit von gelöstem Sauerstoff zu einem Kurzschluss des Elektronentransferprozesses vom Analyten zur Elektrode. Dies führt bei geringen Analytkonzentrationen zu erheblichen Ungenauigkeiten. Insbesondere bei geringen Volumina des Detektionsraums beziehungsweise des Analytlösungsmittels kann deshalb das Detektionsmittel vor einem Sauerstoffeinfluss geschützt werden.

Bei großen Volumina ist die Diffusion von Sauerstoff zur Elektrode durch große Distanzen von der Lösungsoberfläche zur Elektrode limitiert, deswegen kann Sauerstoff vergleichsweise einfach entfernt werden bevor es zu Interferenzen kommen kann. Bei kleinen Volumina konnte jedoch gefunden werden, dass der Abstand von Eingangsöffnung zur Arbeitselektrode beziehungsweise zu dem Detektionsmittel so gering ist, dass Diffusionsprozesse signifikant werden. Daher ist der hier beschriebene Biosensor insbesondere für kleine Probenvolumina relevant und vorteilhaft. Dabei kann es für eine effektive Messung und das besonders effektive Vorliegen der vorbeschriebenen Vorteile besonders vorteilhaft sein, wenn das Volumen des kapillaren Detektionsraums in einem Bereich liegt von ≤ 10µl, etwa ≤ 5µl, beispielsweise in einem Bereich von ≥ 0,5µl bis ≤ 10 µl, etwa von ≥ 1µl bis ≤ 5 µl, etwa in einem Bereich von ≥ 1,5µl bis ≤ 3 µl, besonders bevorzugt in einem Bereich von ≥ 0,3µl bis ≤ 0,5 µl.

Somit ist die vorliegende Erfindung insbesondere für Biosensoren von hoher Relevanz, da Biosensoren sich einerseits durch eine sehr spezifische Erfassung des Analyten auszeichnen und weiterhin eine besonders hohe Empfindlichkeit und eine sehr geringe Nachweisgrenze für den Analyten aufweisen und somit gerade Biosensoren für kleine Volumina geeignet sind.

Es wird somit ein Biosensor vorgeschlagen, der auf besonders sichere und effektive Weise eine Entfernung von gelöstem Sauerstoff in einem System zur Bestimmung eines Analyten mit geringem Analytvolumen erlauben kann. Dabei hat sich herausgestellt, dass insbesondere die Ausgestaltung beziehungsweise der Aufbau des etwa als Teststreifen ausgestalteten Biosensors eine entsprechende Methodik erlaubt, wobei der Einfluss von Sauerstoff signifikant reduziert oder sogar gänzlich ausgeschlossen werden kann.

Zusammenfassend ist es bei dem hier beschriebenen Biosensor somit vorgesehen, dass die Dimensionen des Teststreifens beziehungsweise des Biosensors derart gewählt sind, dass der Sauerstoff durch das Intertisierungsmittel zur Sauerstoffentfernung vollständig entfernt werden kann bevor der Sauerstoff die Arbeitselektrode beziehungsweise das Detektionsmittel durch Diffusionsprozesse erreicht. Dadurch kann es verhindert werden, dass Sauerstoff die Analyse beziehungsweise die Methodik des Biosensors negativ beeinflussen kann.

Dem Vorstehenden folgend kann somit eine besonders sichere und verlässliche Messung beziehungsweise Detektion erlaubt werden, wobei insbesondere eine sauerstoffhaltige Umgebung keinen oder nur einen im Wesentlichen vernachlässigbaren Einfluss auf das Messergebnis erlauben kann.

Dabei können entsprechende Biosensoren einfach und besonders kostengünstig herstellbar sein, da das Herstellungsprinzip auf einfache Weise von bekannten Biosensoren anpassbar ist durch eine Auswahl der entsprechenden Parameter, wie diese vorstehend beschrieben sind.

Hinsichtlich einer Anwendbarkeit können in nicht beschränkender Weise verbesserte Biosensoren für etwa für die die Glukosebestimmung in Blut und anderen wässrigen Lösungen hergestellt werden. Außerdem lassen sich Biosensoren für neue Anwendungsfelder herstellen, wie etwa für die Nitratbestimmung, ohne jedoch auf die vorstehenden Beispiele beschränkt zu sein.

Bevorzugt kann es vorgesehen sein, dass der Abstand zwischen der Arbeitselektrode und der Eingangsöffnung, also insbesondere der nächstgelegenen Eingangsöffnung bei dem Vorsehen mehrere Eingangsöffnungen, in einem Bereich von ≥ 2mm bis ≤ 15mm, bevorzugt in einem Bereich von ≥ 3 mm bis ≤ 8mm liegt. Es hat sich herausgestallt, dass insbesondere in dieser Ausgestaltung das Inertisierungsmittel, und dabei insbesondere die Menge und die Art beziehungsweise die Aktivität des Sauerstoffbindens beziehungsweise der Sauerstoffreaktion, in vorteilhafter Weise ausbildbar sein kann. In anderen Worten kann besonders sichergestellt werden, dass der Sauerstoff die Arbeitselektrode nicht durch Diffusionsprozesse erreichen kann. Dies gilt dabei insbesondere bei den zuvor beschriebenen Volumina des kapillaren Detektionsraums in einem Bereich von ≥ 0,5µl bis ≤ 10 µl.

Aus dem Vorstehenden wird weiterhin ersichtlich, dass insbesondere in dieser Ausgestaltung eine besonders hohe Effektivität des Entfernens des Sauerstoffs möglich sein kann. Denn selbst, wenn Sauerstoff durch das Analytlösungsmittel zu diffundieren beginnt, kann an jeder Position eine Wechselwirkung mit dem Analytlösungsmittel stattfinden. Somit kann der Sauerstoff besonders effektiv entfernt werden beziehungsweise reicht eine vergleichsweise geringe Menge an Inertisierungsmittel aus, um den Sauersoff zu entfernen. Dadurch kann etwa ein Sensor herkömmlicher Größe mit wenig Inertisierungsmittel oder ein Sensor mit besonders kompakter Bauweise ermöglicht werden, was beides anwendungsbezogen von Vorteil sein kann.

Weiterhin kann es von Vorteil sein, dass das Inertisierungsmittel ein enzymbasiertes Inertisierungsmittel ist. Insbesondere derartige Inertisierungsmittel können sich durch ein effektives Entfernen von Sauerstoff aus dem Analytlösungsmittel auszeichnen und somit den Einfluss einer Sauerstoffumgebung für den Biosensor reduzieren. Darüber hinaus können derartige Systeme bei den entsprechenden Anwendungen die eigentliche Messung unberührt lassen, so dass derartige Inertisierungsmittel eine effektive Sauerstoffentfernung kombinieren mit einem verlässlichen Messergebnis.

Ein Beispiel für derartige Enzymsysteme, welche als Inertisierungsmittel verwendet werden können, umfasst etwa Pyranose 2-oxidase (P2Ox) etwa mit einer Katalase (Pox CAT), ohne jedoch hierauf beschränkt zu sein.

Ferner kann es ebenfalls bevorzugt sein, dass das Detektionsmittel ein enzymbasiertes Detektionsmittel ist. Die Auswahl des Detektionsmittel ist grundsätzlich und auch in dieser Anwendung in für den Fachmann ersichtlicher Weise abhängig von der gewünschten Anwendung. Für den beispielhaften Fall eines Glukose-Sensors kann ein enzymbasiertes Detektionsmittel beispielswiese Glukose-Dehydrogenase (GDH) oder auch Glucose-Oxidase (Gox) aufweisen, ohne jedoch hierauf beschränkt zu sein.

Bei den Sensorenzymen kann es sich beispielhaft sowohl um Reduktasen als auch um Oxidasen handeln unabhängig davon, ob das Sensorenzym als Inertisierungsmittel oder als Detektionsmittel eingesetzt wird.

Die vorliegende Erfindung betrifft somit zusammenfassend einen etwa als Teststreifen ausgebildeten elektrochemischen Biosensor für verschiedenste Analyten, wobei die verwendeten Detektionsmittel, wie etwa Sensorenzyme, auch sauerstoffempfindlich sein können oder Sauerstoff selbst im Potentialbereich des Analyten interferiert. Der in der Probe gelöste Sauerstoff wird effektiv entfernt, so dass ein Analyt in einer wässrigen Lösung wie beispielsweise Vollblut, Pflanzensaft, Getränken oder anderen Lösungen bestimmt werden kann, ohne dass die Probe vor atmosphärischem Sauerstoff geschützt werden muss. Dies erlaubt signifikante Vorteile in der Anwendbarkeit und in dem möglichen Anwendungsgebiet.

Hinsichtlich weiterer Vorteile und technischer Merkmale des Biosensors wird hiermit auf die Beschreibung des Systems, des Verfahrens zu Herstellen eines Biosensors, des Verfahrens zum Detektieren eines Analyten und der Verwendung, sowie auf die Figuren und die Beschreibung der Figuren Bezug genommen, und umgekehrt.

Es wird ferner beschrieben ein nicht zur Erfindung gehörendes System zur insbesondere qualitativen oder quantitativen Detektion wenigstens eines in einem Analytlösungsmittel gelösten Analyten, aufweisend einen Biosensor, wie dieser vorstehend im Detail beschrieben ist, und ferner aufweisend ein in dem kapillaren Detektionsraum angeordnetes Analytlösungsmittel, wobei in dem Analytlösungsmittel wenigstens ein zu detektierender Analyt vorgesehen ist.

Das hier beschriebene nicht zur Erfindung gehörende System weist somit zunächst einen Biosensor auf, wobei bezüglich des Biosensors auf die vorstehenden Ausführungen verwiesen wird. Dabei ist es ferner vorgesehen, dass in dem kapillaren Detektionsraum Analytlösungsmittel vorgesehen ist, wobei in dem Analytlösungsmittel wenigstens ein zu detektierender Analyt vorgesehen ist.

Durch ein derartiges System kann es somit erreicht werden, dass der Analyt sicher detektiert werden kann, ohne dass durch das Analytlösungsmittel diffundierender Sauerstoff eine, etwa als amperometrische Messung ausgestaltete, Detektion negativ beeinflusst beziehungsweise die Messung verfälscht. Das Analytlösungsmittel beziehungsweise der Analyt kann dabei in für den Fachmann verständlicher Weise bezüglich des konkreten Anwendungsgebiets gewählt werden. Gleiches gilt für das Detektionsmittel, wie dies vorstehend im Detail beschrieben ist.

Erfindungsgemäß ist das Inertisierungsmittel in dem Analytlösungsmittel zumindest teilweise lösbar oder gelöst. Besonders bevorzugt kann es vorgesehen sein, dass das Inertisierungsmittel in dem Analytlösungsmittel vollständig lösbar beziehungsweise gelöst ist. in dieser Ausgestaltung kann ein besonders sicheres und effektives Entfernen von in dem Analytlösungsmittel vorliegendem Sauerstoff ermöglicht werden.

Denn zum Einen kann sichergestellt werden, dass durch das Analytlösungsmittel diffundierender Sauerstoff mit dem Inertisierungsmittel in Kontakt kommt, so dass eine Wechselwirkung zwischen Sauerstoff und Inertisierungsmittel sichergestellt werden kann.

Zum Anderen kann in dieser Ausgestaltung eine besonders einfache Herstellbarkeit des Biosensors ermöglicht werden. Dies etwa deshalb, da das Inertisierungsmittel bei der Herstellung auf einfache Weise an einer beliebigen Position des Detektionsraums, insbesondere zwischen der Arbeitselektrode und dem Ausgang, lokal begrenzt angeordnet beziehungsweise positioniert werden kann, ohne eine höchst exakte Positionierung über eine definierte Fläche erreichen zu müssen, wodurch eine Positionierung des Inertisierungsmittels mit einer vergleichsweise hohen Toleranz erfolgen kann. Dadurch, dass das Inertisierungsmittel dann in dem Analytlösungsmittel gelöst wird, verteilt sich das Inertisierungsmittel alleine durch Lösungsvorgänge und dadurch durch entsprechende Mischungsvorgänge, so dass in dem gesamten Detektionsraum das Inertisierungsmittel vorliegt.

Somit kann insbesondere in dieser Ausgestaltung eine effektive Sauerstoffentfernung auf einfache Weise ermöglicht werden.

Es kann ferner bevorzugt sein, dass das System ferner eine Auswerteeinheit aufweist, welche die Mehrzahl an Elektroden elektrisch kontaktiert und durch welche anhand von den Elektroden gelieferter Information wenigstens eines von der Menge und der Art des Analyten ermittelbar ist. Eine derartige Auswerteeinheit kann somit die Elektroden elektrisch kontaktieren. Hierzu kann es etwa vorgesehen sein, dass der Sensor in einen Aufnahmebereich der Auswerteeinheit einschiebbar ist, so dass bei einer definierten Position des Biosensors in der Auswerteeinheit die Elektroden kontaktiert werden und die Menge und/oder Art des Analyten ermittelbar ist oder in anderen Worten das Erzeugen eines Messergebnisses erlaubt wird. Unter der von den Elektroden gelieferter Information kann beispielsweise ein Strom oder eine Spannung verstanden werden, welche durch entsprechende Messverfahren detektierbar sind.

Wenn die Auswerteeinheit beispielsweise ausgestaltet ist für eine amperometrische Messung oder zum Durchführen anderer Messverfahren, wie diese vorstehend beschrieben sind, kann auf einfache Weise durch ein Einschieben des etwa als Teststreifen ausgebildeten Biosensors in die Auswerteeinheit eine Auswertung erfolgen, so dass das Vorliegen des Analyten quantitativ und/oder qualitativ angezeigt werden kann.

Hinsichtlich weiterer Vorteile und technischer Merkmale des Systems wird hiermit auf die Beschreibung des Biosensors, des Verfahrens zu Herstellen eines Biosensors, des Verfahrens zum Detektieren eines Analyten und der Verwendung, sowie auf die Figuren und die Beschreibung der Figuren Bezug genommen, und umgekehrt.

Beschrieben wird ferner ein Verfahren zur Detektion wenigstens eines in einem Lösungsmittel gelösten Analyten, aufweisend die Verfahrensschritte:
a) Bereitstellen eines Biosensors, wie dieser vorstehend im Detail beschrieben ist,
b) Befüllen des kapillaren Detektionsraums mit in dem Analytlösungsmittel gelösten Analyten, wobei
c) bei einem Befüllen des kapillaren Detektionsraums das Analytlösungsmittel gemeinsam mit dem Analyten von der Eingangsöffnung zu dem Detektionsmittel geführt wird;
d) Externes Kontaktieren der wenigstens zwei Elektroden; und
e) Ermitteln wenigstens eines von der Menge und der Art des Analyten von durch die Elektroden gelieferter Information.

Das hier beschriebene Verfahren dient somit dazu, wenigstens einen in einem Lösungsmittel gelösten Analyten zu detektieren. Dabei kann die Detektion ein qualitatives Detektieren, ein quantitatives Detektieren oder ein qualitatives und ein quantitatives Detektieren umfassen.

Um dies zu ermöglichen umfasst das Verfahren die folgenden Verfahrensschritte.

Zunächst erfolgt gemäß Verfahrensschritt a) das Bereitstellen eines Biosensors, wie dieser vorstehend im Detail beschrieben ist. Somit wird bezüglich der jeweiligen Merkmale des Biosensors auf die vorstehenden Ausführungen verwiesen.

Nun erfolgt gemäß Verfahrensschritt b) das Befüllen des kapillaren Detektionsraums mit in dem Analytlösungsmittel gelösten Analyten. In anderen Worten wird das Analytlösungsmittel gemeinsam mit dem hierin gelösten Analyten in den Detektionsraum eingeführt beziehungsweise eingefüllt. Dies kann beispielsweise rein durch die Kapillarkräfte des kapillaren Detektionsraums erfolgen, in dem der Biosensor mit einer Eingangsöffnung des Detektionsraum in das Analytlösungsmittel und damit die zu untersuchende Lösung getaucht wird und das Lösungsmittel so in den kapillaren Detektionsraum gelangt und diesen etwa vollständig ausfüllt.

Dabei sollte Verfahrensschritt b) insbesondere derart ablaufen, dass der in dem Analytlösungsmittel gelöste Analyt an dem Detektionsmittel und der Gegenelektrode vorliegt, um eine entsprechende Detektion durchführen zu können. Dies ist allgemein unproblematisch, insoweit der Detektionsraum vollständig mit Analytlösungsmittel gefüllt wird, wie dies vorstehend beschrieben ist.

Dabei ist es gemäß Verfahrensschritt c) ferner vorgesehen, dass bei einem Befüllen des kapillaren Detektionsraums das Analytlösungsmittel gemeinsam mit dem Analyten von der Eingangsöffnung zu dem Detektionsmittel geführt wird. Dabei kann es insbesondere vorgesehen sein, dass das Analytlösungsmitttel entlang dem Inertisierungsmittel geführt wird beziehungsweise an diesem entlangströmt und das Inertisierungsmittel somit bei einem Befüllen des Detektionsraums kontaktiert.

Dies kann zum Einen helfen, bereits Sauerstoff aus dem Analytlösungsmittel zu entfernen, etwa durch eine Reaktion, oder diesen zu immobilisieren. Darüber hinaus ist das Inertisierungsmittel in dem Analytlösungsmittel lösbar, so dass bei einem Einströmen des Analytlösungsmittels das Inertisierungsmittel unmittelbar zumindest teilweise, insbesondere vollständig gelöst werden kann. Letzteres erlaubt eine besonders effektive Reduzierung des Sauerstoffeinflusses und ferner eine verbesserte Herstellbarkeit des Biosensors.

Schließlich erfolgt gemäß der Verfahrensschritte d) und e) ein Externes Kontaktieren der wenigstens zwei Elektroden; und ferner ein Ermitteln wenigstens eines von der Menge und der Art des Analyten durch von durch die Elektroden gelieferter Information und damit eine qualitative und/oder quantitative Bestimmung des Analyten. In diesen Schritten wird somit beispielsweise durch ein Kontaktieren der Elektroden, also insbesondere wenigstens der Arbeitselektrode und der Gegenelektrode, eine Auswertung möglich. Dies kann etwa durch grundsätzlich verschiedene elektrochemische Methoden wie etwa Koulometrie, Amperometrie, Voltammetrie, oder Potentiometrie möglich sein, so dass die Information der Elektroden insbesondere elektrische oder elektrochemische Informationen, wie etwa Stromstärke, Spannung usw., sind.

Ferner kann dieser Verfahrensschritt etwa möglich sein, indem der Biosensor in eine Auswerteeinheit gesteckt wird, wie dies vorstehend detaillierter beschrieben ist.

Das hier beschriebene Verfahren erlaubt somit eine effektive und verlässliche quantitative und/oder qualitative Detektion des in dem Analytlösungsmittel gelösten Analyten. Dabei kann insbesondere eine Beeinflussung durch zu dem Detektionsmittel diffundierenden Sauerstsoff verhindert werden.

Dem Vorstehenden folgend kann es besonders bevorzugt sein, dass von der Eingangsöffnung in Richtung des Detektionsmittels in dem Analytlösungsmittel diffundierender Sauerstoff vollständig durch das Inertisierungsmittel aus dem Analytlösungsmittel entfernt wird.

Insbesondere in dieser Ausgestaltung kann eine effektive Detektion ermöglicht werden, welche unabhängig von den Biosensor umgebendem Sauerstoff ist.

Hinsichtlich weiterer Vorteile und technischer Merkmale des Verfahrens zum Detektieren eines Analyten wird hiermit auf die Beschreibung des Systems, des Biosensors, des Verfahrens zu Herstellen eines Biosensors, und der Verwendung, sowie auf die Figuren und die Beschreibung der Figuren Bezug genommen, und umgekehrt.

Beschrieben wird ferner ein Verfahren zum Herstellen eines Biosensors zur Detektion wenigstens eines in einem Analytlösungsmittel gelösten Analyten, insbesondere eines Biosensors, wie dieser vorstehend im Detail beschrieben ist, wobei das Verfahren die Verfahrensschritte aufweist:
i) Bereitstellen eines Grundkörpers mit einem kapillaren Detektionsraum, wobei der Detektionsraum ein Volumen in einem Bereich von ≤ 10 µl aufweist;
ii) Anordnen einer Mehrzahl an Elektroden derart, dass diese extern elektrisch kontaktierbar sind und in den Detektionsraum verlaufen;
iii) Anordnen eines Detektionsmittels an einer als Arbeitselektrode dienenden Elektrode; und
iv) Anordnen eines Inertisierungsmittels in dem Detektionsraum, insbesondere zwischen einer Eingangsöffnung des Detektionsraums und der als Arbeitselektrode dienenden Elektrode, wobei
v) die Länge des kapillaren Detektionsraums zwischen der als Arbeitselektrode dienenden Elektrode und der Eingangsöffnung und das Inertisierungsmittel derart gewählt und aneinander angepasst werden, dass von der Eingangsöffnung in Richtung zu der als Arbeitselektrode dienenden Elektrode in dem Analytlösungsmittel diffundierender Sauerstoff vor einem Erreichen des Detektionsmittels durch das Inertisierungsmittel aus dem Analytlösungsmittel vollständig entfernbar ist.

Dabei kann es vorgesehen sein, dass die vorstehend beschriebenen Verfahrensschritte in der vorbeschriebenen Reihenfolge ablaufen oder auch in einer von der vorstehend beschriebenen Reihenfolge abweichenden Reihenfolge. Darüber hinaus können die jeweiligen Verfahrensschritte jeweils einschrittig sein, oder eine Mehrzahl an Teilschritten aufweisen, wobei die Teilschritte unterschiedlicher Verfahrensschritte sich zeitlich überschneiden können beziehungsweise wobei ein oder mehrere Teilschritte eines Verfahrensschritts zumindest teilweise zwischen Teilschritten eines weiteren Verfahrensschritts ablaufen können, ohne den Rahmen der Erfindung zu verlassen.

Ferner wird bezüglich der einzelnen Merkmale auf die Beschreibung und die entsprechenden Eigenschaften und Ausgestaltungen verwiesen, wie sie an anderer Stellen, etwa bei der Beschreibung des Biosensors, ausgeführt sind.

Das Verfahren zum Herstellen des Biosensors weist die folgenden Verfahrensschritte auf. Zunächst erfolgt gemäß Verfahrensschritt i) das Bereitstellen eines Grundkörpers mit einem kapillaren Detektionsraum, wobei der Detektionsraum ein Volumen in einem Bereich von ≤ 10µl, etwa von ≤ 5µl aufweist. In diesem Verfahrensschritt wird somit die Grundstruktur des Biosensors ausgestaltet, welche die nachfolgend beschriebenen Funktionsteile tragen kann.

Grundsätzlich kann der Grundkörper aus einem Teil geformt sein beziehungsweise werden oder kann der Grundkörper aus einer Mehrzahl an Einzelteilen aufgebaut sein beziehungsweise werden. Beispielsweise kann es vorgesehen sein, dass zum Ausbilden des Grundkörpers die folgenden Verfahrensschritte verwendet werden:
vi) Bereitstellen eines Sensordeckels;
vii) Aufbringen zweier seitlicher Begrenzungen auf den Sensordeckel derart, dass die seitlichen Begrenzungen einen den Detektionsraum ausbildenden Zwischenraum zwischen den seitlichen Begrenzungen definieren, und dass die seitlichen Begrenzungen wenigstens einseitig eine Eingangsöffnung ausbilden;
ix) Bereitstellen eines Sensorbodens; und
xii) Fixieren des Sensorbodens auf den Seitenteilen.

Dabei sollte darauf geachtet werden, dass gegebenenfalls zuvor aufgebrachte Elektroden beziehungsweise ein zuvor aufgebrachtes Detektionsmittel in dem Detektionsraum vorliegt. Dies kann auf einfache Weise realisiert werden durch eine entsprechende Dimensionierung der Einzelteile beziehungsweise durch eine entsprechende Positionierung der Elektroden und des Detektionsmittels.

Ferner kann der Grundkörper, wie etwa umfassend den Sensordeckel, den Sensorboden und die seitlichen Begrenzungen, aus Papier, Pappe, Kunststoff oder anderen Materialien geformt sein. Ferner können der Sensordeckel und der Sensorboden wie auch die seitlichen Begrenzungen plattenartig geformt sein. Durch die hier beschriebene Ausgestaltung kann somit auf einfache Weise durch das aufeinander fügen, etwa mittels Kleben, von Sensorboden, Seitenteilen und Sensordeckel der kapillare Detektionsraum ausgebildet werden.

Weiterhin erfolgt bei dem hier beschriebenen Verfahren gemäß Verfahrensschritt ii) das Anordnen einer Mehrzahl an Elektroden derart, dass diese elektrisch extern kontaktierbar sind und in den Detektionsraum verlaufen. Somit weisen die Elektroden einen Bereich auf, der derart angeordnet ist, dass er bei einem erzeugten Sensor in dem Detektionsraum positioniert ist, und weisen ferner einen Bereich auf, der extern elektrisch kontaktierbar ist.

Dabei können nur eine Arbeitselektrode und eine Gegenelektrode aufgebracht werden, oder es kann zusätzlich eine Referenzelektrode aufgebracht werden, wie dies vorstehend beschrieben ist. Ferner kann das Aufbringen der Elektroden etwa mittels eines Druckprozesses, etwa mittels eines Siebdruckprozesses, einer strukturierten elektrisch leitfähigen Schicht ermöglicht werden, beispielsweise einer Schicht aus Kohlenstoff oder einem Metall, wie beispielsweise Gold.

Beispielsweise können die Elektroden gemäß Verfahrensschritt x) auf den Sensordeckel aufgebracht werden, bevor dieser auf den Seitenteilen beziehungsweise den seitlichen Begrenzungen fixiert wird.

Zusätzlich erfolgt bei dem hier beschriebenen Verfahren gemäß den Verfahrensschritten iii) und xi) das Anordnen eines Detektionsmittels an einer als Arbeitselektrode dienenden Elektrode. Dieser Schritt kann beispielsweise nach dem Aufbringen der Elektrode erfolgen, wie dies vorstehend beschrieben ist, und/oder bevor in der beschriebenen Ausgestaltung der Sensorboden auf die seitlichen Begrenzungen gefügt wird.

Neben dem vorbeschriebenen Aufbringen des Detektionsmittels umfasst das Verfahren ferner gemäß Verfahrensschritt iv) das Anordnen eines Inertisierungsmittels in dem Detektionsraum, insbesondere zwischen einer Eingangsöffnung des Detektionsraums und dem Detektionsmittel. Diesbezüglich kann das Inertisierungsmittel wählbar sein, wie dies vorstehend im Detail beschrieben ist, und kann das Inertisierungsmittel grundsätzlich mit einem wählbaren Verfahren aufgebracht werden. Beispielsweise kann es durch einen herkömmlichen Beschichtungsvorgang aufgebracht werden.

Beispielsweise kann es vorgesehen sein, dass das Inertisierungsmittel bei der vorstehend beschriebenen Ausgestaltung der Herstellung des Grundkörpers gemäß Verfahrensschritt viii) aufgebracht wird, nachdem die seitlichen Begrenzungen auf den Sensordeckel aufgebracht sind und bevor der Sensorboden an den seitlichen Begrenzungen fixiert wird und somit in den Zwischenraum aufgebracht wird. Dann kann das Inertisierungsmittel ebenfalls auf den Sensordeckel aufgebracht werden.

Dem Vorstehenden folgend kann es somit vorgesehen sein, dass das Verfahren zum Herstellen des Biosensors die folgenden Verfahrensschritte aufweist:
vi) Bereitstellen eines Sensordeckels;
vii) Aufbringen zweier seitlicher Begrenzungen auf den Sensordeckel derart, dass die seitlichen Begrenzungen einen den Detektionsraum ausbildenden Zwischenraum zwischen den seitlichen Begrenzungen definieren, und dass die seitlichen Begrenzungen wenigstens einseitig eine Eingangsöffnung ausbilden;
viii) Aufbringen eines Inertisierungsmittels in den Zwischenraum;
ix) Bereitstellen eines Sensorbodens;
x) Aufbringen wenigstens zweier Elektroden auf den Sensorboden;
xi) Aufbringen eines Detektionsmittels auf eine als Arbeitselektrode zu verwendende Elektrode; und
xii) Fixieren des Sensorbodens auf den Seitenteilen derart, dass die Elektroden in den sich aus dem Zwischenraum bildenden Detektionsraum verlaufen und das Detektionsmittel in dem Detektionsraum vorliegt.

Grundsätzlich ist es ferner gemäß Verfahrensschritt v) vorgesehen, dass die Länge des kapillaren Detektionsraums zwischen der als Arbeitselektrode dienenden Elektrode und der Eingangsöffnung und das Inertisierungsmittel derart gewählt und aneinander angepasst werden, dass von der Eingangsöffnung in Richtung zu der als Arbeitselektrode dienenden Elektrode in dem Analytlösungsmittel diffundierender Sauerstoff vor einem Erreichen der als Arbeitselektrode dienenden Elektrode durch das Inertisierungsmittel aus dem Analytlösungsmittel vollständig entfernbar ist.

Dieses Merkmal erlaubt, wie es mit Bezug auf den Sensor vorstehend in größerem Detail beschrieben ist, dass durch ein in dem Detektionsraum vorliegendes Analytlösungsmittel diffundierender Sauerstoff nicht zu der als Arbeitselektrode dienenden Elektrode gelangt. Dadurch kann eine sichere und effektive Messung erlaubt werden, die ferner sehr unabhängig ist von dem Vorliegen von Sauerstoff außerhalb des Sensors.

Hinsichtlich weiterer Vorteile und technischer Merkmale des Verfahrens zu Herstellen eines Biosensors wird hiermit auf die Beschreibung des Systems, des Biosensors, des Verfahrens zum Detektieren eines Analyten, und der Verwendung, sowie auf die Figuren und die Beschreibung der Figuren Bezug genommen, und umgekehrt.

Beschrieben wird ferner die Verwendung eines Sensors zur Detektion wenigstens eines in einem Lösungsmittel gelösten Analyten. Dabei kann die Detektion qualitativ, quantitativ oder qualitativ und quantitativ erfolgen.

Diese Verwendung ermöglicht eine sichere und effektive Detektion des Analyten, die ferner sehr unabhängig ist von dem Vorliegen von Sauerstoff außerhalb des Sensors.

Beispielsweise erfolgt die Verwendung wenigstens eines von einem Sensor, einem System oder einem Verfahren, wie diese vorstehend im Detail beschrieben sind, zur Glukosebestimmung oder zur Nitratbestimmung.

Hinsichtlich weiterer Vorteile und technischer Merkmale der Verwendung wird hiermit auf die Beschreibung des Systems, des Biosensors, des Verfahrens zum Detektieren eines Analyten, und des Verfahrens zu Herstellen eines Biosensors, sowie auf die Figuren und die Beschreibung der Figuren Bezug genommen, und umgekehrt.

Nachfolgend wird die Erfindung unter Bezugnahme auf die anliegenden Zeichnungen und Beispiele exemplarisch erläutert, wobei die nachfolgend dargestellten Merkmale sowohl jeweils einzeln als auch in Kombination einen Aspekt der Erfindung darstellen können, und wobei die Erfindung nicht auf die folgende Zeichnung, die folgende Beschreibung und das folgende Ausführungsbeispiel beschränkt ist.

Es zeigen:
Fig. 1 eine schematische Ansicht eines Biosensors und einer Herstellung desselben;
Fig. 2 eine schematische teilweise transparente Ansicht in verschiedenen Formen zur Visualisierung der Ausmaße des Biosensors;
Fig. 3 verschiedene Querschnitte durch den Detektionsraum des Biosensors zum Beschreiben der Sauerstoffentfernung durch ein Enzymsystem;
Fig.4 Diagramme darstellend eine Simulation einer Sauerstoffentfernung durch ein Enzymsystem;
Fig. 5 ein weiteres Diagramm darstellend eine Simulation einer Sauerstoffentfernung durch ein Enzymsystem
Fig. 6 ein Diagramm darstellend das Verhalten eines Biosensors ohne ein Inertisierungsmittel;
Fig. 7 Diagramme zeigend das Messverhalten eines Biosensors bei unterschiedlichen Analytkonzentrationen;
Fig. 8 ein weiteres Diagramm zeigend das Messverhalten eines Biosensors bei unterschiedlichen Analytkonzentrationen; und
Fig. 9 ein weiteres Diagramm zeigend das Messverhalten eines Biosensors.

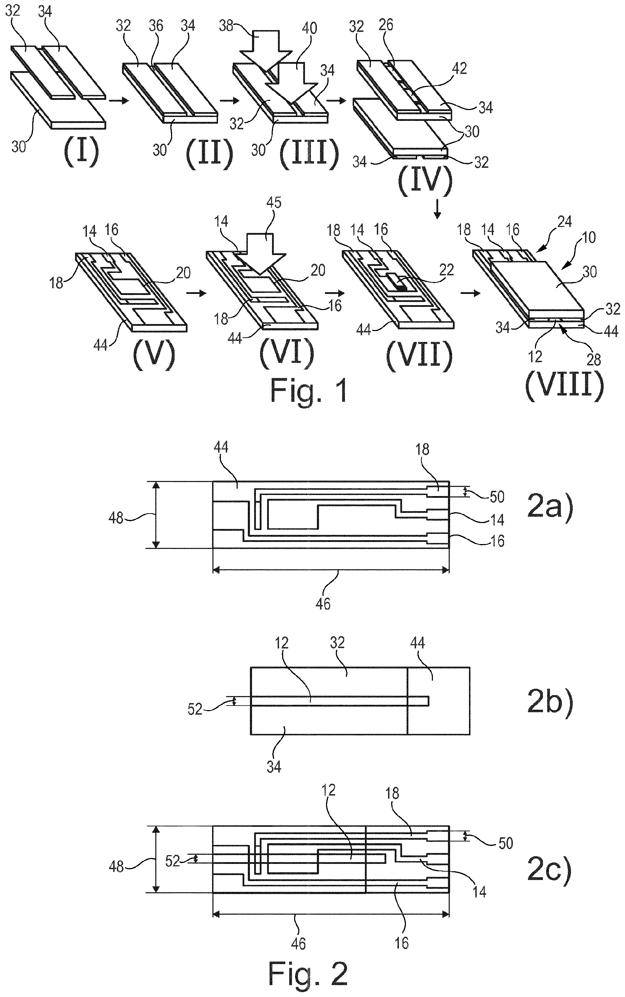

In der Figur 1 ist ein Biosensor 10 und ein Verfahren zum Herstellen eines solchen beschrieben.

Insbesondere wird ein elektrochemischer Biosensor 10 zur Detektion wenigstens eines in einem Analytlösungsmittel gelösten Analyten erzeugt. Ein derartiger Biosensor 10 umfasst einen kapillaren Detektionsraum 12, der ein Volumen in einem Bereich von ≤ 10µl, beispielsweise ≤ 5µl, vorzugsweise in einem Bereich von ≥ 1,5µl bis ≤ 3 µl, aufweist. Ferner umfasst der Biosensor 10 eine Mehrzahl an Elektroden, nämlich eine Arbeitselektrode 14, eine Gegenelektrode 16 und eine Referenzelektrode 18. Die Arbeitselektrode 14 weist einen in dem kapillaren Detektionsraum 12 positionierten Messbereich 20 auf, der mit einem immobilen Detektionsmittel 22 zum Wechselwirken mit dem Analyten versehen ist. Ferner verlaufen sämtliche Elektroden 14, 16, 18 in den Detektionsraum 12 und sind von außen elektrisch kontaktierbar. Hierzu weist der Biosensor einen Kontaktbereich 24 auf, in welchem die Elektroden 14, 16, 18 freiliegen. Beispielsweise kann der Kontaktbereich 24 in eine Auswerteeinheit geschoben werden, um so eine Auswertung der Detektion beziehungsweise der Messung zu ermöglichen.

Es ist ferner vorgesehen, dass in dem kapillaren Detektionsraum 12 ferner ein sauerstoffbindendes oder sauerstoffreaktives Inertisierungsmittel 26 vorgesehen ist, das zumindest zum Teil zwischen dem immobilen Detektionsmittel 22 beziehungsweise der Arbeitselektrode 14 und einer Eingangsöffnung 28 des kapillaren Detektionsraums 12 positioniert ist.

Für eine effektive und insbesondere sauerstoffunabhängige Detektion ist es ferner vorgesehen, dass die Länge des kapillaren Detektionsraums 12 zwischen der Arbeitselektrode 14 und der Eingangsöffnung 28 und das Inertisierungsmittel 26 derart gewählt und aneinander angepasst sind, dass von der Eingangsöffnung 28 in Richtung zu der Arbeitselektrode 14 in einem in dem Detektionsraum 12 vorliegenden Analytlösungsmittel diffundierender Sauerstoff vor einem Erreichen der Arbeitselektrode 14 durch das Inertisierungsmittel 26 aus dem Analytlösungsmittel vollständig entfernbar ist. Beispielsweise kann es vorgesehen sein, wie dies nachfolgend gezeigt ist, der Abstand zwischen der Arbeitselektrode 14 und der Eingangsöffnung 28 in einem Bereich ≥ 2mm bis ≤ 15mm liegt.

Ein derartiger Sensor ist insbesondere in der Figur 1 als Endprodukt des dort gezeigten Verfahrens gezeigt als Stufe VIII. Eine derartige Ausgestaltung kann als Teststreifen bezeichnet werden, der insbesondere im Vergleich zur Breite flach ist und dabei mehrschichtig aufgebaut.

Das Verfahren zum Herstellen eines derartigen Biosensors 10 kann etwa wie folgt ablaufen, wie dies in der Figur 1 gezeigt ist. Grundsätzlich werden gemäß Figur 1 ein erster Teil als Stufe IV erzeugt und ein Zweiter Teil als Stufe VII, welche anschließend zum Ausbilden des Biosensors 10 als Stufe VIII miteinander verbunden werden.

Zum Herstellen der Stufe IV werden zunächst ein Sensordeckel 30 und zwei seitliche Begrenzungen 32, 34 bereitgestellt als Stufe I. Dann werden zum Erzeugen der Stufe II die seitlichen Begrenzungen 32, 34 auf den Sensordeckel 30 derart aufgebracht und dort fixiert, etwa geklebt, dass die seitlichen Begrenzungen 32, 34 einen den Detektionsraum 12 ausbildenden Zwischenraum 36 zwischen den seitlichen Begrenzungen 32, 34 definieren, wobei die seitlichen Begrenzungen 32, 34 wenigstens einseitig die Eingangsöffnung 28 ausbilden.

Anschließend erfolgt das Aufbringen des Inertisierungsmittels 26 in den Zwischenraum 36 zur Erzeugung der Stufe IV. Dabei kann als Zwischenstufe III zunächst je nach Aufbringungsmöglichkeit, etwa eines Beschichtens, das Inertisierungsmittel 26 noch feucht sein und nach einem Trocknen in das getrocknete Inertisierungsmittel 26 überführt werden. Das Inertisierungsmittel 26 dient wie vorstehend beschrieben insbesondere dem Entfernen von Sauerstoff. Beispielsweise kann gemäß Pfeil 38 Pyranose 2-oxidase (P2Ox) etwa mit einer Katalase (Pox CAT) aufgebracht werden, etwa mittels Dropcasting. Dabei sind die Enzyme beispielhaft in eine Polyvinylalkoholmatrix (5 mg/ml PVA, 25 mM Phosphat, 20 µM EDTA, pH 7,3) eingebettet.

Gemäß Pfeil 40 kann etwa ein zusätzliches Reagenz 42, in diesem Fall Glukose, aufgebracht werden, welches die Entfernung des Sauerstoffs verbessern beziehungsweise ermöglichen kann wie dies nachstehend beschrieben ist. Diese Ausgestaltung ist beispielsweise für Nitratsensoren als Biosensor 10 von Vorteil. Glukose kann in einer Konzentration von 9 mg/ml in Reinstwasser als Reagenz 42 aufgetragen werden Die Glukose sollte separat aufgetragen werden, um zu verhindern, dass die Oxidase das Substrat sofort umsetzt. Nach diesen Verfahrensschritten kann die Stufe IV fertig gestellt sein.

Grundsätzlich kann es vorgesehen sein, dass das Reagenz 42 als Teil des Inertisierungsmittels 26 angesehen wird, so dass grundsätzlich, wenn von einem Inertisierungsmittel 26 gesprochen wird, dieses eine Substanz sein kann oder eben, beispielsweise neben einem Enzym, ein Substrat beziehungsweise Reagenz 42 aufweisen kann.

Zur Ausbildung der Stufe VII kann zunächst ein Sensorboden 44 bereitgestellt werden. Auf diesen können eine Mehrzahl an Elektroden 14, 16, 18 aufgebracht werden, die als Arbeitselektrode 14, Gegenelektrode 16 und Referenzelektrode 18 ausgestaltet sind beziehungsweise verwendet werden können. Das Aufbringen kann etwa mittels Druckvorgängen oder anderen Beschichtungsvorgängen erfolgen. Ferner können die Elektroden 14, 16, 18 etwa aus einem Metall oder einem elektrisch leitfähigen Kohlenstoff ausgebildet werden. Dies kann die Stufe V erzeugen.

Anschließend erfolgt das Aufbringen des Detektionsmittels 22 auf die Arbeitselektrode 14 gemäß Pfeil 45 zur Erzeugung der Stufe VII. Dabei kann als Zwischenstufe VI zunächst je nach Aufbringungsmöglichkeit, etwa eines Beschichtens, das Detektionsmittel 22 noch feucht sein und nach einem Trocknen in das getrocknete Inertisierungsmittel 22 gemäß Stufe VII überführt werden. Im Detail kann es vorgesehen sein, dass auf eine als Siebdruckelektrode ausgebildete Arbeitselektrode 14 per Dropcasting eine Nitratreduktase (NaR), eingebettet in ein Viologen-Polyvinylalkohol Polymer, als Detektionsmittel 22 aufgetragen wird.

Anschließend können die Stufen IV und VII derart miteinander verbunden werden, dass die mit den Elektroden 14, 16, 18 versehene Seite des Sensorbodens 44 zu den seitlichen Begrenzungen 32, 34 beziehungsweise dem Zwischenraum 36 gerichtet ist. Im Detail erfolgt ein Fixieren, etwa mittels Kleben, des Sensorbodens 44 auf den seitlichen Begrenzungen 32, 34 derart, dass die Elektroden 14, 16, 18 in den sich aus dem Zwischenraum 36 bildenden Detektionsraum 12 verlaufen und das Detektionsmittel 22 in dem Detektionsraum 12 vorliegt. Ferner ist der Kontaktbereich 24 vorgesehen, an welchem die Elektroden 14, 16, 18 etwa durch eine Auswerteeinheit extern kontaktierbar sind. Dies kann realisierbar sein, indem der Sensordeckel 30 eine geringere Länge aufweist, als der Sensorboden 44.

Ferner ist es vorgesehen, dass die Länge des kapillaren Detektionsraums 12 zwischen dem der Arbeitselektrode 14 und der Eingangsöffnung 28 und das Inertisierungsmittel 26 derart gewählt und aneinander angepasst werden, dass von der Eingangsöffnung 28 in Richtung zu der Arbeitselektrode 14 in einem in dem Detektionsraum 12 vorliegenden Analytlösungsmittel diffundierender Sauerstoff vor einem Erreichen der Arbeitselektrode 14 durch das Inertisierungsmittel 26 aus dem Analytlösungsmittel vollständig entfernbar ist.

Beispielhafte aber in keiner Weise beschränkende Dimensionen eines derartigen Biosensors 10 sind in der Figur 2 zur Verdeutlichung gezeigt, wobei Figur 2a) die Draufsicht auf die Stufe V zeigt, wobei Figur 2b) eine transparente Draufsicht auf einen Teil der Stufe VIII, nämlich ohne Elektroden 14, 16, 18, ohne Inertisierungsmittel 26, ohne Reagenz 42 und Detektionsmittel 22, also nur auf den Grundkörper des Biosensors 10, zeigt und wobei Figur 2C eine zur Verdeutlichung zum Teil ebenfalls transparente Ansicht der Stufe VIII zeigt.

Im Detail ist in Figur 2a) gezeigt, dass die Länge des Sensorbodens 44, gezeigt als die Länge 46, 20mm beträgt, und dass die Breite des Sensorbodens 44, gezeigt als Breite 48, 5mm beträgt. Ferner liegt die Breite als Breite 50 beispielhaft für die Referenzelektrode 18 bei 1mm. Die Arbeitselektrode 14 kann ferner eine Breite von 3,5 mm aufweisen.

In Figur 2b) ist gezeigt, dass der kapillare Detektionsraum 12 einen Durchmesser beziehungsweise eine Breite als Breite 52 von 1mm oder 2mm aufweist. Derartige Ausgestaltungen können besonders geeignet sein, um einen Detektionsraum 12 zu schaffen, der ein Volumen in einem Bereich von ≤ 10µl, beispielsweise von ≤ 5µl, aufweist.

Entscheidend für die effektive Entfernung von gelöstem Sauerstoff in der Umgebung der Arbeitselektrode 14 sind die Abmessungen des Detektionsraums 12. Auf Basis der Aktivität des Inertisierungsmittels 26, etwa der Enzymaktivität, und der Diffusionskonstante für Sauerstoff in dem Analytlösungsmittel, wie etwa von wässrigen Lösungen, kann ein Modell erstellt werden, durch welches die Zeit abgeschätzt und der Abstand der Arbeitselektrode 14 zu der Eingangsöffnung 28 bestimmt werden kann. Um eine effektive Sauerstoffentfernung zu erreichen, kann die Arbeitselektrode 14 etwa 5 mm von der Eingangsöffnung 28 entfernt sein. So ergibt sich beispielsweise eine Mindestlänge des Detektionsraums 12 von 15 mm. Der Detektionsraum 12 kann dabei einen Durchmesser von 1-2 mm und eine Höhe von 100 µm aufweisen. Bei einer Länge von 15 mm ergibt sich so ein Gesamtvolumen von 1,5 bzw. 3,0 µl.

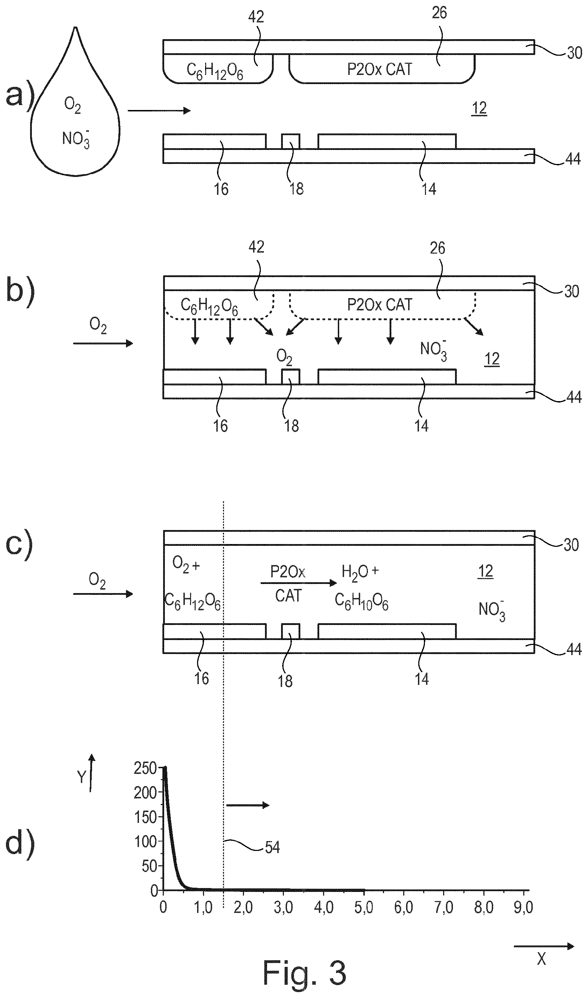

In der Figur 3 ist ein Querschnitt durch den Detektionsraum 12 gezeigt, wobei insbesondere das Inertisierungsmittel 26 und Glukose als zusätzliches Reagenz 42 gezeigt sind. Dabei wird eine Sauerstoffentfernung des Inertisierungsmittels 26 bei einer Verwendung des Biosensors 10 als Nitratsensor gezeigt.

Der Analyt (Nitrat) wird gemeinsam mit dem Analytlösungsmittel durch die Kapillarwirkung in den Detektionsraum 12 aufgesogen, wie dies in Figur 1a) gezeigt ist. Die Probe befindet sich jedoch im Austausch mit der Umgebungsluft, so dass ständig Luftsauerstoff in die Probe gelangt welcher entfernt werden muss. Der gelöste Sauerstoff wird über eine gekoppelte Enzymreaktion entfernt, wie dies nachfolgend beschrieben ist.

Das Reagenz 42 und das Inertisierungsmittel 26 sind in dem Analytlösungsmittel löslich und werden durch die Füllung des Detektionsraums 12 gelöst. Dabei werden das Reagenz 42 und das Inertisierungsmittel 26 miteinander vereint und das Enzymsystem (P2OxCAT), welches in dieser Ausgestaltung als Inertisierungsmittel 26 dient, kann unter Reaktion der Glukose als Reagenz 42 mit dem Sauerstoff mit der Entfernung des gelösten Sauerstoffs beginnen, wie dies in der Figur 3b) gezeigt ist. Sauerstoff, der aus der Umgebungsluft in Lösung geht, wird durch das Inertisierungsmittel 26 in Zusammenarbeit mit seinem Reagenz 42 vollständig entfernt. Auf der Arbeitselektrode 14 ist das Detektionsmittel 22 immobilisiert. Durch die anaeroben Bedingungen kann eine störungsfreie Messung des Analyten durchgeführt werden, wie dies in der Figur 3c) gezeigt ist. Figur 3d) zeigt ferner den Sauerstoffgehalt in dem Analytlösungsmittel in µM auf der Y-Achse relativ zu dem Abstand zur Eingangsöffnung 28, welche in mm auf der X-Achse gezeigt ist. Dabei ist gezeigt, dass ab einem Abstand 54 von ca. 1,5mm von der Eingangsöffnung 28 sämtlicher Sauerstoff aus dem Analytlösungsmittel entfernt ist, somit für eine Messung anaerobe Bedingungen vorliegen.

Im Folgenden werden Beispiele gezeigt, welche die effektive Wirkung eines wie vorstehend beschrieben ausgestalteten Biosensors 10 zeigen sollen.

Bevor die ersten Beispiele durchgeführt wurden, wurde an Hand von Simulationen die minimalen Konzentrationen für das Enzymsystem als Inertisierungsmittel 26 zur Sauerstoffentfernung ermittelt, um bei gegebenen Maßen der Elektroden 12, 14, 16 wie vorstehend beschrieben eine effektive Sauerstoffentfernung nach ≤ 10 Sekunden zu erreichen. Die Simulation wurde auf Basis von enzymkinetischen Daten des Enzyms Pyranose Oxidase durchgeführt (Rungsrisuriyachai, ABB, 2008; https://doi.org/10.1016/j.abb.2008.12.018). Des Weiteren wurden für die Diffusion von Sauerstoff in Wasser als Analytlösungsmittel folgende Werte angenommen (2,4 10-5 cm²*s⁻¹, Fourmond, JACS, 2015; DOI 10.1021/jacs.5b01194). Um eine volle Sättigung des Inertisierungsmittels 26 mit seinem Substrat beziehungsweise dem Reagenz 42 zu gewährleisten, wurde die Konzentration der Glucose als Konzentration des Reagenz 42 auf 10 mmol/l festgelegt.

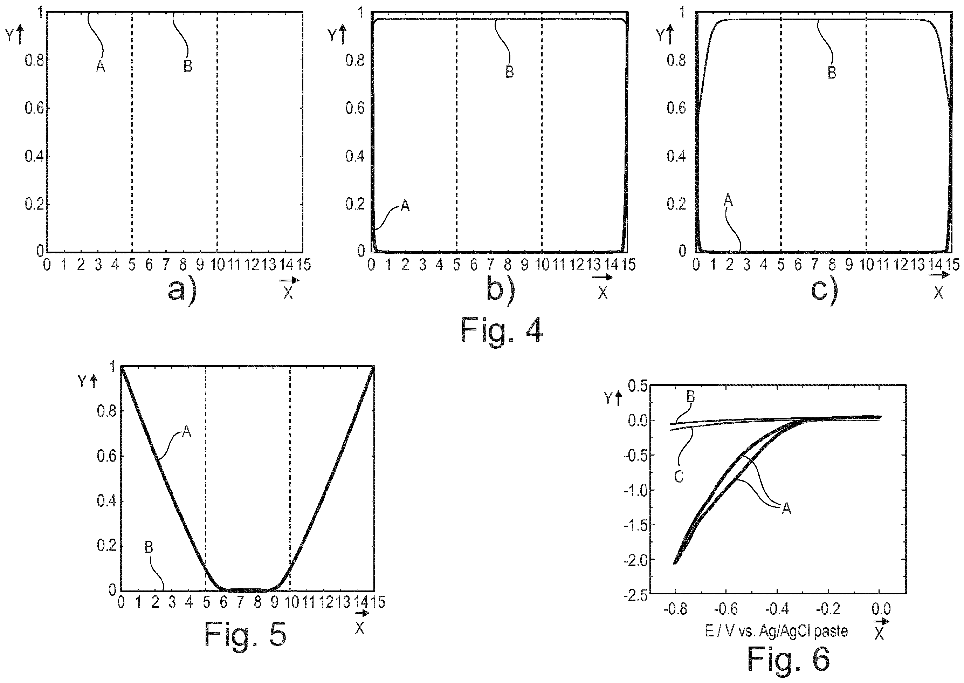

Die Konzentration an Pyranose Oxidase, die für eine vollständige Sauerstoffentfernung nach ≤ 10 Sekunden notwendig ist, wurde zu 10 µmol/l bestimmt. Die Simulation ist etwa in der Figur 4 gezeigt, wobei jeweils die x-Achsen den Abstand der jeweiligen Position in dem Detektionsraum 12 zu der Eingangsöffnung 28 zeigen und die Y-Achse eine dimensionslose Konzentration angibt, und wobei ferner das Diagramm a) den Startpunkt der Messung, das Diagramm b) eine Zeit nach 10 Sekunden und das Diagramm c) eine Zeit nach 300 Sekunden zeigt. Ferner beschreiben die gestrichelten Linien die Position von Elektroden, wobei die linke Linie die Position der Referenzelektrode 18 und die rechte Linie die Arbeitselektrode 14 zeigt. Die Gegenelektrode kann unmittelbar an der Eingangsöffnung vorliegen, wie dies etwa den Figuren 1 bis 3 zu entnehmen ist. Die Linie A beschreibt ferner die Konzentration von Sauerstoff und die Linie B beschreibt die Konzentration von Glukose als Reagenz 42. Die Diagramme gemäß Figur 4 zeigen dabei, dass die Lösung nach einer Sauerstoffentfernung nach 10 Sekunden für mindestens 300 Sekunden sauerstofffrei bleibt.

Geht man von einer konstanten Diffusion von Sauerstoff und einer gleichbleibenden Aktivität des Enzyms als Inertisierungsmittel 26 aus, dann ist das Substrat beziehungsweise Reagenz 42 (Glucose) in der eingesetzten Konzentration von 10 mmol/l ausreichend um die Lösung theoretisch ≤1200 Minuten sauerstofffrei zu halten. Dies ist in der Figur 5 gezeigt. Diese zeigt ein Diagramm, wobei die x-Achse den Abstand zu der Eingangsöffnung 28 zeigt und die Y-Achse eine dimensionslose Konzentration, und wobei ferner das Diagramm eine Zeit nach 1440 Minuten zeigt. Ferner beschreiben die gestrichelten Linien die Position von Elektroden, wobei die linke Linie die Position der Referenzelektrode 18 und die rechte Linie die Arbeitselektrode 14 zeigt. Die Gegenelektrode kann unmittelbar an der Eingangsöffnung 28 vorliegen, wie dies etwa den Figuren 1 bis 3 zu entnehmen ist. Die Linie A beschreibt die Konzentration von Sauerstoff und die Linie B beschreibt die Konzentration von Glukose als Reagenz 42.

Den Anstieg der Sauerstoffkonzentration auf der rechten Seite der Diagramme der Figuren 4 und 5 kann dadurch erklärt werden, dass der Detektionsraum 12 in dieser Ausgestaltung beidseitig geöffnet war, die Achse somit streng genommen den Abstand zu einer Eingangsöffnung 28 zeigt, eine weitere jedoch bei 15mm liegt, der Detektionsraum somit eine Länge von 15mm aufweist, wie dies auch vorstehend beschrieben ist.

Bei einem ersten Experiment konnte die zu testende Flüssigkeit per Kapillarwirkung aufgesogen und der Detektionsraum 12 so vollständig mit Flüssigkeit, also Analytlösungsmittel mit darin gelöstem Analyten, gefüllt werden. Für die in den folgenden Figuren gezeigten Beispielexperimente wurde ein Biosensor 10 zur Nitratdetektion verwendet. Als Sensorenzym wurde Nitrat Reduktase verwendet. Zur Entfernung des Sauerstoffs wurde ein Enzymsystem aufweisend Pyranose Oxidase und Katalase verwendet (wie in US 9,187,779 B2 beschrieben).

Für die Arbeitselektrode 14 wurde eine Goldelektrode verwendet, wobei grundsätzlich für die Arbeitselektrode 14 oder die weiteren Elektroden 16, 18 auch andere Materialien vorstellbar sind, wie z.B. glasartiger Kohlenstoff (Englisch: Glassy Carbon). Als Referenzelektrode 18 wurde ein Silber/Silberchlorid-System verwendet.

In dem ersten Experiment wurden die durch Siebdruck erzeugten Elektroden 14, 16, 18 ohne das Inertisierungsmittel 26 zur Sauerstoffentfernung getestet. Dies ist in der Figur 6 gezeigt, wobei dieser Versuch durch die Kurven A des in Figur 6 gezeigten Diagramms dargestellt ist. In dem Diagramm in Figur 6 ist auf der Y-Achse der Strom in µA gezeigt und ist auf der X-Achse die Spannung in Volt der Elektrode gegen Ag/AgCl-Paste als Referenzelektrode 18 gezeigt. An diesem Experiment kann man deutlich den Einfluss von Sauerstoff auf das Messsignal im Bereich 0,8 V bis 0,3 V erkennen. Die Kurven B und C hingegen zeigen die Entfernung des Sauerstoffs durch Glucose Oxidase (Kurve B) bzw. durch Pyranose Oxidase (Kurve C) als Inertisiserungsmittel 26. Bei der Entfernung des Sauerstoffs durch Pyranose Oxidase wurde ein geschlossener Teststreifen beziehungsweise Biosensor 10 verwendet. Die beiden anderen Experimente wurden mit nicht-geschlossenen Biosensoren 10, also ohne Sensordeckel, durchgeführt. Als Reaktionspuffer wurde 25 mM Phosphat, 20 µM EDTA, pH 7,3 verwendet. Die Enzyme zur Sauerstoffentfernung wurden mit jeweils 1 mg/ml Glucose Oxidase / Pyranose Oxidase und Katalase verwendet. Als Substrat beziehungsweise Reagenz 42 wurde 9 mg/ml Glucose verwendet. Dabei ist gezeigt, dass durch das Inertisierungsmittel 26, gegebenenfalls erneut mit seinem Reagenz 42, der Einfluss des Sauerstoffs im Wesentlichen ausgeschaltet werden kann.

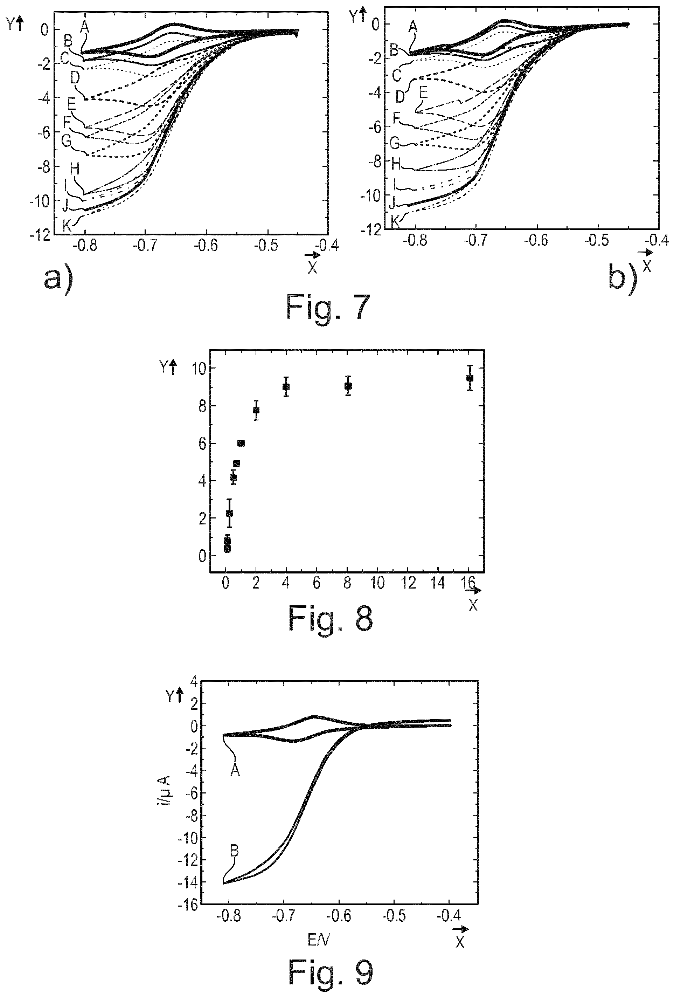

Um die effektive Wirkung eines Biosensors 10, etwa als Teststreifen ausgebildet, zu zeigen, wurde an einem offenen System, also ohne Sensordeckel 30, eine Konzentrationsreihe mit verschiedenen Konzentrationen von Kaliumnitrat (0,5 bis 16 mM) in der Lösung gemessen, wie dies in den Figuren 7 und 8 gezeigt ist. Dabei zeigt in den Diagrammen a) und b) jeweils die Kurve A eine Konzentration von 0mM, die Kurve B zeigt eine Konzentration von 0,05mM, die Kurve C zeigt eine Konzentration von 0,1mM, die Kurve D zeigt eine Konzentration von 0,25mM, die Kurve E zeigt eine Konzentration von 0,5mM, die Kurve F zeigt eine Konzentration von 0,75mM, die Kurve G zeigt eine Konzentration von 1mM, die Kurve H zeigt eine Konzentration von 2mM, die Kurve I zeigt eine Konzentration von 4mM, die Kurve J zeigt eine Konzentration von 8mM und die Kurve K zeigt eine Konzentration von 16mM.

Das Enzymsystem zur Sauerstoffentfernung als Inertisierungsmittel 26 wurde dabei ebenfalls direkt in die Lösung gegeben. Dabei ist auf der Y-Achse der Strom in µA gezeigt und ist auf der X-Achse die Spannung in Volt der Elektrode gegen Ag/AgCl-Paste als Referenzelektrode 18 gezeigt.

In der Figur 8 ist ferner die Stromstärke in µA bei einer Spannung von -0,8 V auf der Y-Achse gegen die bekannten Nitratkonzentrationen in mM auf der X-Achse aufgetragen. Mit Hilfe dieser Auftragung lässt sich der lineare Bereich des Biosensors bestimmen. Dabei konnte ein linearer Bereich von 0-500 µM ermittelt werden. Danach erreicht das Messsignal schnell eine Sättigung ab einer Konzentration von 4.000 µM. Dadurch kann ein besonders nachweisstarkes Detektieren des Analyten ermöglicht werden.

Bei den Figuren 7 und 8 wurde als Reaktionspuffer 25 mM Phosphat, 20 µM EDTA, pH 7,3 verwendet. Die Enzyme zur Sauerstoffentfernung wurden mit jeweils 1 mg/ml Pyranose Oxidase und Katalase verwendet. Als Substrat beziehungsweise Reagenz 42 wurden 9 mg/ml Glucose verwendet. Nitrat Reduktase wurde in einer Konzentration von 1 mg/ml eingesetzt. Jeder Zyklus wurde mit einer Vorschubgeschwindigkeit von 2 mV/s durchgeführt. Ein Zyklus ist somit in 3,3 Minuten abgeschlossen. Es wurden verschiedene Konzentrationen von Kaliumnitrat im Bereich von 0,05 bis 16 mM für die Konzentrationsreihe verwendet. Das Diagramnn b) zeigt die zu Diagramm a) wiederholte Messung der Konzentrationsreihe mit einem neuen Biosensor 10, um die Reproduzierbarkeit zu demonstrieren.

In Figur 8 ist die Stromstärke bei einer Spannung von -0,8V gegen die bekannten Konzentrationen aufgetragen. Aus dieser Auftragung lässt sich der lineare Bereich bestimmen.

Um die Funktionsfähigkeit eines Biosensors 10 als Nitratteststreifen zu demonstrieren wurde ein geschlossener Streifen mit dem Sensorenzym Nitrat Reduktase als Detektionsmittel 22 hergestellt und dieser Teststreifen dazu verwendet, Kaliumnitrat in einer Lösung zu detektieren. Dies ist in Figur 9 gezeigt, wobei die X-Achse wiederum die Spannung in Volt angibt und die Y-Achse den Strom in µA. Die Kurve A zeigt dabei eine Konzentration an Kaliumnitrat von 0mM und die Kurve B zeigt dabei eine Konzentration an Kaliumnitrat von 10mM.

Bei diesem Versuch wurde als Reaktionspuffer wurde 25 mM Phosphat, 20 µM EDTA, pH 7,3 verwendet. Die Enzyme zur Sauerstoffentfernung wurden mit jeweils 1 mg/ml Pyranose Oxidase und Katalase verwendet. Als Substrat wurde 9 mg/ml Glucose verwendet. Nitrat Reduktase wurde in einer Konzentration von 1 mg/ml eingesetzt. Es ist gezeigt, dass eine effektive Detektion von Nitrat möglich ist.

Aus dem Vorstehenden wird somit ersichtlich, dass es mit dem hier beschriebenen Biosensor 10 möglich ist, etwa als Teststreifen ausgebildete Sensoren für bioanalytische Fragestellungen (z.B. Blutzucker, Nitrat) herzustellen, bei denen in der Probe gelöster Sauerstoff vollständig entfernt wird. Dies hat den Vorteil, dass der entfernte Sauerstoff keinen Einfluss auf die Sensorenzyme und somit auf die Messung haben kann. Dadurch wird es möglich Biosensoren herzustellen, die eine höhere Genauigkeit haben, da der Sauerstoff-Effekt vollständig eliminiert wird. Weiterhin kann diese Methode zur Sauerstoffentfernung und der spezifische Aufbau des Biosensors 10 auch dazu verwendet werden, um neuartige Biosensoren 10 herzustellen, die sauerstoffempfindliche Sensorenzyme verwenden.

### Bezugszeichen

- 10: Biosensor
- 12: Detektionsraum
- 14: Arbeitselektrode
- 16: Gegenelektrode
- 18: Referenzelektrode
- 20: Messbereich
- 22: Detektionsmittel
- 24: Kontaktbereich
- 26: Inertisierungsmittel
- 28: Eingangsöffnung
- 30: Sensordeckel
- 32: seitliche Begrenzung
- 34: seitliche Begrenzung
- 36: Zwischenraum
- 38: Pfeil
- 40: Pfeil
- 42: Reagenz
- 44: Sensorboden
- 45: Pfeil
- 46: Länge
- 48: Breite
- 50: Breite
- 52: Breite
- 54: Abstand

## Patentansprüche

1. Elektrochemischer Biosensor zur Detektion wenigstens eines in einem Analytlösungsmittel gelösten Analyten, aufweisend einen kapillaren Detektionsraum (12) und eine Mehrzahl an Elektroden, wobei die Mehrzahl an Elektroden (14, 16, 18) wenigstens eine Arbeitselektrode (14) aufweist, welche einen in dem kapillaren Detektionsraum (12) positionierten Messbereich (20) aufweist, der mit einem immobilen Detektionsmittel (22) zum Wechselwirken mit dem Analyten versehen ist, und wobei die Mehrzahl an Elektroden ferner eine Gegenelektrode (16) aufweist, die in den kapillaren Detektionsraum (12) verläuft, und wobei die Mehrzahl an Elektroden (14, 16, 18) außerhalb des kapillaren Detektionsraums (12) elektrisch kontaktierbar ist, wobei der kapillare Detektionsraum (12) ein Volumen in einem Bereich von ≤ 10 µl aufweist, und wobei in dem kapillaren Detektionsraum (12) ferner ein sauerstoffbindendes oder sauerstoffreaktives Inertisierungsmittel (26) vorgesehen ist, das zumindest zum Teil zwischen der Arbeitselektrode (14) und einer Eingangsöffnung (28) des kapillaren Detektionsraums (12) positioniert ist, und wobei die Länge des kapillaren Detektionsraums (12) zwischen der Arbeitselektrode (14) und der Eingangsöffnung (28) und die Art und Menge des Inertisierungsmittels (26) derart gewählt und aneinander angepasst sind, dass von der Eingangsöffnung (28) in Richtung zu der Arbeitselektrode in dem im Detektionsraum (12) angeordneten Analytlösungsmittel diffundierender Sauerstoff vor einem Erreichen der Arbeitselektrode (14) durch das Inertisierungsmittel (26) aus dem Analytlösungsmittel vollständig entfernbar ist und wobei das Inertisierungsmittel (26) in dem Analytlösungsmittel zumindest teilweise lösbar ist, so dass bei einem Einströmen des Analytlösungsmittels das Inertisierungsmittel (26) unmittelbar zumindest teilweise, insbesondere vollständig lösbar ist.

2. Biosensor nach Anspruch 1, **dadurch gekennzeichnet, dass** das Volumen des kapillaren Detektionsraums (12) in einem Bereich liegt von ≤ 5 µl.

3. Biosensor nach Anspruch 1 oder 2, **dadurch gekennzeichnet, dass** der Abstand zwischen der Arbeitselektrode (14) und der Eingangsöffnung (28) in einem Bereich von ≥ 2 mm bis ≤ 15 mm liegt.

4. Biosensor nach einem der Ansprüche 1 bis 3, **dadurch gekennzeichnet, dass** das Inertisierungsmittel (26) ein enzymbasiertes Inertisierungsmittel ist.

5. Biosensor nach einem der Ansprüche 1 bis 4, **dadurch gekennzeichnet, dass** das Detektionsmittel (22) ein enzymbasiertes Detektionsmittel ist.

6. Verfahren zur Detektion wenigstens eines in einem Lösungsmittel gelösten Analyten, aufweisend die Verfahrensschritte:
a) Bereitstellen eines Biosensors (10) nach einem der Ansprüche 1 bis 5,
b) Befüllen des kapillaren Detektionsraums (12) mit in dem Analytlösungsmittel gelöstem Analyten, wobei
c) bei einem Befüllen des kapillaren Detektionsraums (12) der in dem Analytlösungsmittel gelöste Analyt von der Eingangsöffnung (28) zu dem Detektionsmittel (22) geführt wird;
d) Externes Kontaktieren der Elektroden (14, 16, 18); und
e) Ermitteln wenigstens eines von der Menge und der Art des Analyten von durch die Elektroden (14, 16, 18) gelieferter Information, wobei
sich bei oder nach Verfahrensschritt b) das Inertisierungsmittel (26) in dem Analytlösungsmittel zumindest teilweise löst.

7. Verfahren nach Anspruch 6, **dadurch gekennzeichnet, dass** von der Eingangsöffnung (28) in Richtung des Detektionsmittels (22) in dem Analytlösungsmittel diffundierender Sauerstoff vollständig durch das Inertisierungsmittel (26) aus dem Analytlösungsmittel entfernt wird.

8. Verfahren zum Herstellen eines Biosensors (10) nach einem der Ansprüche 1 bis 5 zur Detektion wenigstens eines in einem Analytlösungsmittel gelösten Analyten, wobei das Verfahren die Verfahrensschritte aufweist:
i) Bereitstellen eines Grundkörpers mit einem kapillaren Detektionsraum (12), wobei der Detektionsraum (12) ein Volumen in einem Bereich von ≤ 10 µl aufweist;
ii) Anordnen einer Mehrzahl an Elektroden (14, 16, 18) derart, dass diese extern elektrisch kontaktierbar sind und in den Detektionsraum (12) verlaufen;
iii) Anordnen eines Detektionsmittels (22) an einer als Arbeitselektrode (14) dienenden Elektrode; und
iv) Anordnen eines Inertisierungsmittels (26) in dem Detektionsraum (12) zwischen einer Eingangsöffnung (28) des Detektionsraums (12) und der als Arbeitselektrode (14) dienenden Elektrode, wobei
v) die Länge des kapillaren Detektionsraums (12) zwischen der als Arbeitselektrode (14) dienenden Elektrode und der Eingangsöffnung (28) und die Art und Menge des Inertisierungsmittels (26) derart gewählt und aneinander angepasst werden, dass von der Eingangsöffnung (28) in Richtung zu der als Arbeitselektrode (14) dienenden Elektrode in dem Detektionsraum (12) angeordneten Analytlösungsmittel diffundierender Sauerstoff vor einem Erreichen der als Arbeitselektrode (14) dienenden Elektrode durch das Inertisierungsmittel (26) aus dem Analytlösungsmittel vollständig entfernbar ist und wobei das Inertisierungsmittel (26) in dem Analytlösungsmittel zumindest teilweise lösbar ist, so dass bei einem Einströmen des Analytlösungsmittels das Inertisierungsmittel (26) unmittelbar zumindest teilweise, insbesondere vollständig lösbar ist.

9. Verfahren nach Anspruch 8, **dadurch gekennzeichnet, dass** das Verfahren die folgenden Verfahrensschritte aufweist:
vi) Bereitstellen eines Sensordeckels (30);
vii) Aufbringen zweier seitlicher Begrenzungen (32, 34) auf den Sensordeckel (30) derart, dass die seitlichen Begrenzungen (32, 34) einen den Detektionsraum (12) ausbildenden Zwischenraum (36) zwischen den seitlichen Begrenzungen (32, 34) definieren, und dass die seitlichen Begrenzungen (32, 34) wenigstens einseitig eine Eingangsöffnung (28) ausbilden;
viii) Aufbringen des Inertisierungsmittels (26) in den Zwischenraum (36);
ix) Bereitstellen eines Sensorbodens (44);
x) Aufbringen wenigstens zweier der Elektroden (14, 16) auf den Sensorboden (44);
xi) Aufbringen des Detektionsmittels (22) auf eine als Arbeitselektrode (14) zu verwendende Elektrode; und
xii) Fixieren des Sensorbodens (44) auf den Seitenteilen (32, 34) derart, dass die Elektroden (14, 16) in den sich aus dem Zwischenraum (36) bildenden Detektionsraum (12) verlaufen und das Detektionsmittel (22) in dem Detektionsraum (12) vorliegt.

10. Verwendung des Biosensors (10) nach einem der Ansprüche 1 bis 5 zur Detektion wenigstens eines in einem Lösungsmittel gelösten Analyten.

11. Verwendung nach Anspruch 10, **dadurch gekennzeichnet, dass** der Biosensor (10) nach einem der Ansprüche 1 bis 5 zur Glukosebestimmung oder zur Nitratbestimmung verwendet wird.

## Claims

1. Electrochemical biosensor for detecting at least one analyte dissolved in an analyte solvent, comprising a capillary detection chamber (12) and a plurality of electrodes, wherein the plurality of electrodes (14, 16, 18) comprise at least one working electrode (14) with a measurement region (20) which is positioned in the capillary detection chamber (12) and provided with an immobile detection means (22) for interacting with the analyte, and wherein the plurality of electrodes further comprise a counter electrode (16) which extends into the capillary detection chamber (12), and wherein the plurality of electrodes (14, 16, 18) are electrically contactable outside the capillary detection chamber (12), wherein the capillary detection chamber (12) has a volume of ≤10 µl, and wherein, furthermore, an oxygen-binding or oxygen-reactive inerting agent (26) is provided in the capillary detection chamber (12) and positioned at least in part between the working electrode (14) and an inlet (28) of the capillary detection chamber (12), and wherein the length of the capillary detection chamber (12) between the working electrode (14) and the inlet (28) and also the type and amount of the inerting agent (26) are chosen and matched to one another such that oxygen diffusing from the inlet (28) in the direction of the working electrode in the analyte solvent disposed in the detection chamber (12) can be removed completely from the analyte solvent by the inerting agent (26) before reaching the working electrode (14), and wherein the inerting agent (26) is at least partially soluble in the analyte solvent such that, in the event of an influx of the analyte solvent, the inerting agent (26) is immediately soluble, at least in part and in particular in full.

2. Biosensor according to Claim 1, **characterized in that** the volume of the capillary detection chamber (12) is ≤5 µl.

3. Biosensor according to Claim 1 or 2, **characterized in that** the distance between the working electrode (14) and the inlet (28) is in a range from ≥2 mm to ≤15 mm.

4. Biosensor according to any of Claims 1 to 3, **characterized in that** the inerting agent (26) is an enzyme-based inerting agent.

5. Biosensor according to any of Claims 1 to 4, **characterized in that** the detection means (22) is an enzyme-based detection means.

6. Method for detecting at least one analyte dissolved in a solvent, comprising the method steps of:
a) providing a biosensor (10) according to any of Claims 1 to 5,
b) filling the capillary detection chamber (12) with analyte dissolved in the analyte solvent, wherein
c) when filling the capillary detection chamber (12), the analyte dissolved in the analyte solvent is guided from the inlet (28) to the detection means (22);
d) externally contacting the electrodes (14, 16, 18); and
e) determining at least one of the amount and type of analyte using information supplied by the electrodes (14, 16, 18), wherein
at or after method step b), the inerting agent (26) dissolves in the analyte solvent at least in part.

7. Method according to Claim 6, **characterized in that** oxygen diffusing from the inlet (28) in the direction of the detection means (22) in the analyte solvent is removed completely from the analyte solvent by the inerting agent (26).

8. Method for producing a biosensor (10) according to any of Claims 1 to 5 for detecting at least one analyte dissolved in an analyte solvent, wherein the method comprises the method steps of:
i) providing a main body with a capillary detection chamber (12), wherein the detection chamber (12) has a volume of ≤10 µl;
ii) arranging a plurality of electrodes (14, 16, 18) such that they can be electrically contacted externally and run into the detection chamber (12);
iii) arranging a detection means (22) on an electrode serving as a working electrode (14); and
iv) arranging an inerting agent (26) in the detection chamber (12) between an inlet (28) of the detection chamber (12) and the electrode serving as the working electrode (14), wherein
v) the length of the capillary detection chamber (12) between the electrode serving as the working electrode (14) and the inlet (28) and also the type and amount of the inerting agent (26) are chosen and matched to one another such that oxygen diffusing from the inlet (28) in the direction of the electrode serving as the working electrode (14) in the analyte solvent disposed in the detection chamber (12) can be removed completely from the analyte solvent by the inerting agent (26) before reaching the electrode serving as the working electrode (14) and wherein the inerting agent (26) is at least partially soluble in the analyte solvent such that, in the event of an influx of the analyte solvent, the inerting agent (26) is immediately soluble, at least in part and in particular in full.

9. Method according to Claim 8, **characterized in that** the method comprises the following method steps:
vi) providing a sensor cover (30);
vii) applying two lateral boundaries (32, 34) to the sensor cover (30) in such a way that the lateral boundaries (32, 34) define an intermediate space (36), which forms the detection chamber (12), between the lateral boundaries (32, 34) and that the lateral boundaries (32, 34) form an inlet (28) on at least one side;
viii) introducing the inerting agent (26) into the intermediate space (36);
ix) providing a sensor base (44);
x) applying at least two of the electrodes (14, 16) to the sensor base (44);
xi) applying the detection means (22) to an electrode to be used as a working electrode (14); and
xii) securing the sensor base (44) to the lateral parts (32, 34) in such a way that the electrodes (14, 16) run into the detection chamber (12) formed by the intermediate space (36), and the detection means (22) is present in the detection chamber (12).

10. Use of the biosensor (10) according to any of Claims 1 to 5 for the detection of at least one analyte dissolved in a solvent.

11. Use according to Claim 10, **characterized in that** the biosensor (10) according to any of Claims 1 to 5 is used for the determination of glucose or for the determination of nitrate.

## Revendications

1. Biocapteur électrochimique pour la détection d'au moins un analyte dissous dans un solvant pour analytes, comportant une chambre de détection capillaire (12) et une pluralité d'électrodes, la pluralité d'électrodes (14, 16, 18) comportant au moins une électrode de travail (14) qui présente une zone de mesure (20) positionnée dans la chambre de détection capillaire (12) et qui est pourvue d'un moyen de détection immobile (22) pour interagir avec l'analyte, et la pluralité d'électrodes comportant en outre une contre-électrode (16) qui s'étend dans la chambre de détection capillaire (12), et la pluralité d'électrodes (14, 16, 18) pouvant être mise en contact électrique à l'extérieur de la chambre de détection capillaire (12), la chambre de détection capillaire (12) présentant un volume se situant dans une plage de ≤ 10 µl, un agent d'inertage qui se lie l'oxygène ou réagit avec l'oxygène (26) étant en outre prévu dans la chambre de détection capillaire (12), lequel agent d'inertage est positionné au moins partiellement entre l'électrode de travail (14) et un orifice d'entrée (28) de la chambre de détection capillaire (12), et la longueur de la chambre de détection capillaire (12) entre l'électrode de travail (14) et l'orifice d'entrée (28), ainsi que le type et la quantité de l'agent d'inertage (26) étant sélectionnés et adaptés l'un à l'autre de telle sorte que l'oxygène, diffusant depuis l'orifice d'entrée (28) en direction de l'électrode de travail dans le solvant pour analytes disposé dans la chambre de détection (12), puisse être totalement éliminé du solvant pour analytes par l'agent d'inertage (26) avant d'atteindre l'électrode de travail (14), et l'agent d'inertage (26) étant au moins partiellement soluble dans le solvant pour analytes de telle sorte que, lors d'une entrée du solvant pour analytes, l'agent d'inertage (26) soit immédiatement au moins partiellement, en particulier totalement, soluble.

2. Biocapteur selon la revendication 1, **caractérisé en ce que** le volume de la chambre de détection capillaire (12) se situe dans une plage de ≤ 5 µl.

3. Biocapteur selon la revendication 1 ou 2, **caractérisé en ce que** la distance entre l'électrode de travail (14) et l'orifice d'entrée (28) se situe dans une plage de ≥ 2 mm à ≤ 15 mm.

4. Biocapteur selon l'une des revendications 1 à 3, **caractérisé en ce que** l'agent d'inertage (26) est un agent d'inertage à base d'enzyme.

5. Biocapteur selon l'une des revendications 1 à 4, **caractérisé en ce que** le moyen de détection (22) est un moyen de détection à base d'enzyme.

6. Procédé de détection d'au moins un analyte dissous dans un solvant, comprenant les étapes de procédé suivantes :
a) fournir un biocapteur (10) selon l'une des revendications 1 à 5,
b) remplir la chambre de détection capillaire (12) de l'analyte dissous dans le solvant pour analytes, dans lequel
c) lors du remplissage de la chambre de détection capillaire (12), l'analyte dissous dans le solvant pour analytes est guidé depuis l'orifice d'entrée (28) vers le moyen de détection (22) ;
d) mettre en contact les électrodes (14, 16, 18) avec l'extérieur ; et
e) déterminer au moins l'un de la quantité et du type des analytes à partir d'informations fournies par les électrodes (14, 16, 18), dans lequel
l'agent d'inertage (26) se dissout au moins partiellement dans le solvant pour analytes pendant ou après l'étape de procédé b).

7. Procédé selon la revendication 6, **caractérisé en ce que** l'oxygène diffusant dans le solvant pour analytes depuis l'orifice d'entrée (28) en direction du moyen de détection (22) est totalement éliminé du solvant pour analytes par l'agent d'inertage (26).

8. Procédé de fabrication d'un biocapteur (10) selon l'une des revendications 1 à 5 pour la détection d'au moins un analyte dissous dans un solvant pour analytes, le procédé comprenant les étapes de procédé suivantes :
i) fournir un corps de base pourvu d'une chambre de détection capillaire (12), la chambre de détection (12) présentant un volume se situant dans une plage de ≤ 10 µl ;
ii) disposer une pluralité d'électrodes (14, 16, 18) de telle sorte que celles-ci puissent être mises en contact électrique avec l'extérieur et s'étendent dans la chambre de détection (12) ;
iii) disposer un moyen de détection (22) au niveau d'une électrode servant d'électrode de travail (14) ; et
iv) disposer un agent d'inertage (26) dans la chambre de détection (12) entre un orifice d'entrée (28) de la chambre de détection (12) et l'électrode servant d'électrode de travail (14), dans lequel
v) la longueur de la chambre de détection capillaire (12) entre l'électrode servant d'électrode de travail (14) et l'orifice d'entrée (28), ainsi que le type et la quantité d'agent d'inertage (26) sont choisis et adaptés l'un à l'autre de telle sorte que l'oxygène, diffusant depuis l'orifice d'entrée (28) en direction de l'électrode servant d'électrode de travail (14) dans le solvant pour analytes disposé dans la chambre de détection (12), puisse être totalement éliminé du solvant pour analytes par l'agent d'inertage (26) avant d'atteindre l'électrode servant d'électrode de travail (14), et l'agent d'inertage (26) étant au moins partiellement soluble dans le solvant pour analytes de telle sorte que, lors d'une entrée du solvant pour analytes, l'agent d'inertage (26) soit immédiatement au moins partiellement, en particulier totalement, soluble.

9. Procédé selon la revendication 8, **caractérisé en ce que** le procédé comprend les étapes de procédé suivantes :
vi) fournir un couvercle de capteur (30) ;
vii) appliquer deux délimitations latérales (32, 34) sur le couvercle de capteur (30) de telle sorte que les délimitations latérales (32, 34) définissent entre les délimitations latérales (32, 34) un espace intermédiaire (36) formant la chambre de détection (12), et que les délimitations latérales (32, 34) forment un orifice d'entrée (28) au moins d'un côté ;
viii) appliquer l'agent d'inertage (26) dans l'espace intermédiaire (36) ;
ix) fournir un fond de capteur (44) ;
x) appliquer au moins deux des électrodes (14, 16) sur le fond de capteur (44) ;
x) appliquer le moyen de détection (22) sur une électrode à utiliser comme électrode de travail (14) ; et
xii) fixer le fond de capteur (44) sur les parties latérales (32, 34) de telle sorte que les électrodes (14, 16) s'étendent dans la chambre de détection (12) formée à partir de l'espace intermédiaire (36), et que le moyen de détection (22) soit présent dans la chambre de détection (12).

10. Utilisation du biocapteur (10) selon l'une des revendications 1 à 5 pour détecter au moins un analyte dissous dans un solvant.

11. Utilisation selon la revendication 10, **caractérisée en ce que** le biocapteur (10) selon l'une des revendications 1 à 5 est utilisé pour la détermination du glucose ou pour la détermination du nitrate.
